# DEMANDE DE BREVET EUROPEEN

(11) **EP 4 706 928 A1**
(43) Date de publication de la demande: **11.03.2026**
(21) Numéro de dépôt: 25200486.6
(22) Date de dépôt: 05.09.2025
(51) Int. Cl.: B29C 43/24, B29C 43/46, H01M 4/04, B29L 31/34, D21G 1/00, D21G 1/02, B30B 3/04

(54) **MACHINE ET PROCÉDÉ DE CALANDRAGE AYANT UN ROULEAU DE TRAVAIL AVEC MULTIPLES ROULEAUX D'APPUI**

(30) Priorité: 06.09.2024 FR 2409463; 18.04.2025 FR 2504194
(71) Demandeur: Ingecal, 69680 Chassieu (FR)
(72) Inventeur: PEREIRA REBELO, Pedro, 01130 Echallon (FR)
(74) Mandataire: Germain Maureau

(57) **Abrégé**

L'invention propose une machine de calandrage (1), ainsi qu'un procédé de calandrage, pour le calandrage d'un feuillard (4), du type comportant un premier et un second rouleau de travail (10, 20), rotatifs respectivement autour d'un premier et second axe (Y10, Y20) parallèles entre eux, les deux rouleaux de travail étant contrarotatifs et définissant un espace de calandrage (30) dans lequel le feuillard (4) défile d'amont en aval,
**caractérisée par** au moins deux rouleaux d'appui (11, 12), respectivement amont (11) et aval (12), associés au premier rouleau de travail (10), parallèles entre eux, parallèles au premier rouleau de travail (10) et chacun en appui contre le premier rouleau de travail (10), chacun en une zone d'appui (C11, C12), respectivement amont (C11) et aval (C12), agencées toutes les deux sur un côté du premier rouleau de travail (10) opposé à l'espace de calandrage par rapport au premier axe (Y10).

## Description

### Domaine Technique

L'invention concerne le domaine des machines de calandrage. Une machine de calandrage est utilisée pour le calandrage d'un feuillard que l'on veut calandrer. Un tel feuillard peut être composé d'une unique feuille ou couche, ou d'une superposition d'au moins deux feuilles ou couches accolées l'une à l'autre face contre face, les différentes feuilles d'un même feuillard pouvant être constituées de différents matériaux. L'opération de calandrage du feuillard, qui est effectuée dans une machine de calandrage, vise notamment à calibrer l'épaisseur du feuillard, et/ou à compacter au moins une couche du feuillard, et/ou à assembler l'une à l'autre différentes couches du feuillard.

Une telle machine de calandrage pourra être notamment utilisée pour la fabrication de composants de cellules électrochimiques, notamment de composants d'électrodes pour des cellules électrochimiques, tout particulièrement pour des cellules électrochimiques de batterie d'accumulateurs électriques.

### Arrière-plan technique

Dans le domaine de la fabrication des batteries d'accumulateurs, notamment de type lithium-ion, il est connu de fabriquer des composants d'électrodes comprenant au moins un support métallique sous la forme d'une feuille métallique, et, au moins sur une face du support métallique, une couche de matériau d'électrode, en imposant à de tels composants une opération de calandrage opérée dans une machine de calandrage.

Tout particulièrement, dans certaines applications, une telle machine de calandrage pourra être utilisée pour fabriquer un composant d'électrode comprenant un feuillard ayant une feuille métallique, qui peut former un collecteur de courant pour la cellule électrochimique, et qui peut former un support métallique, et ayant, au moins sur une face du support métallique, une couche de matériau d'électrode.

Dans certaines applications, une telle machine pourra être utilisée pour fabriquer une couche de matériau d'électrode auto-supportée, qui pourra ensuite être mis en œuvre dans la fabrication d'une cellule électrochimique. Par exemple, une telle machine pourra être utilisée pour fabriquer un film à partir d'une poudre, y compris une mixture comprenant une ou plusieurs poudres, ledit film étant par exemple calandré dans la machine de calandrage dans une opération de formation du film par laquelle la poudre, introduite juste en amont de l'espace de calandrage, est calandrée dans l'espace de calandrage pour obtenir, en aval de l'espace de calandrage, un film formé de ladite poudre ou mixture de comprenant une ou plusieurs poudres, ce film ayant de préférence suffisamment de cohésion pour former une couche auto-supportée pouvant être manipulée en aval. Dans de telles applications, en amont de l'espace de calandrage, le feuillard au sens du présent texte est donc constitué d'une couche ou quantité de poudre ou mixture comprenant une ou plusieurs poudres, par exemple délivrée par un doseur sur une largeur de travail à l'entrée de l'espace de calandrage, la poudre étant encore non agglomérée, ou seulement partiellement agglomérée, la poudre étant agglomérée par calandrage dans l'espace de calandrage pour former le film qui constitue le feuillard en aval de l'espace de calandrage.

De manière connue, une machine de calandrage comporte un premier rouleau de travail rotatif autour d'un premier axe, et un second rouleau de travail rotatif autour d'un second axe parallèle au premier axe du premier rouleau de travail. Les deux rouleaux de travail sont contrarotatifs et définissent entre eux un espace de calandrage dans lequel le feuillard défile, dans un plan de défilement, selon une direction de défilement allant d'amont en aval. La distance entre les axes des deux rouleaux de travail détermine l'épaisseur de l'espace de calandrage, et détermine donc l'effort de calandrage qui est imposé au feuillard lorsque celui-ci défile entre les deux rouleaux de travail au travers de cet espace de calandrage. Cet effort de calandrage consiste en un effort de compression qui est appliquée sur le feuillard selon une direction qui est approximativement perpendiculaire au plan de défilement du feuillard entre les deux rouleaux de travail. Cet effort de calandrage dépend notamment de l'épaisseur de l'espace de calandrage par rapport à l'épaisseur du feuillard à l'entrée de l'espace de calandrage.

La maîtrise de l'épaisseur de l'espace de calandrage est cruciale pour la qualité de l'opération de calandrage.

De manière connue, une machine de calandrage est prévue pour traiter un feuillard ayant une dimension transversale, perpendiculaire à la direction de défilement dans le plan de défilement, qui, suivant les machines, pourra être de l'ordre de quelques dizaines de centimètres, par exemple en étant comprise dans la gamme allant de 50 cm à 150 cm. Une des problématiques importantes pour maîtriser l'épaisseur de l'espace de calandrage est celle de maîtriser les déformations, notamment en flexion, des rouleaux de travail. Pour cela, il est connu d'associer, à un rouleau de travail donné, un rouleau d'appui qui est parallèle à ce rouleau de travail et qui est en appui contre ce rouleau de travail en une zone d'appui agencée sur un côté du rouleau de travail qui est opposé à l'espace de calandrage par rapport à l'axe de ce rouleau de travail.

Dans une configuration habituelle, chacun des deux rouleaux de travail est associé à son propre rouleau d'appui, les axes de rotation des deux rouleaux de travail et des deux rouleaux d'appui étant dans ce cas tous sensiblement coplanaires dans un plan perpendiculaire à la direction de défilement.

Une problématique liée à cet agencement coplanaire réside dans les imprécisions géométriques qui peuvent conduire à des efforts qui ne sont pas parfaitement compris dans le plan des axes des quatre rouleaux, ce qui génère, sur au moins un des rouleaux de travail, des efforts orientés selon la direction de défilement, pouvant provoquer des déplacements relatifs entre les rouleaux. De tels déplacements relatifs peuvent affecter l'épaisseur de l'espace de calandrage entre les rouleaux de travail, et peuvent donc affecter la qualité de l'opération de calandrage.

Selon un aspect, l'invention a donc pour objectif de proposer une nouvelle conception d'une machine de calandrage qui permet de maîtriser au mieux l'épaisseur de l'espace de calandrage, ceci afin d'obtenir une qualité optimale de l'opération de calandrage.

Par ailleurs, dans de telles machines, il est fréquent qu'ou moins deux rouleaux, par exemple un rouleau de travail et un rouleau d'appui, ou les deux rouleaux de travail, sont entrainés en rotation autour de leur axe chacun par un moteur électrique. Dans ce cas, les deux rouleaux sont généralement liés mécaniquement l'un à l'autre dans leur rotation respective, par exemple du fait du contact entre un rouleau de travail et un rouleau d'appui associé, ou du fait que le feuillard circule au contact entre les deux rouleaux de travail. Dans tous le cas, il est préférable de limiter voire d'éviter tout glissement au niveau du contact entre les deux rouleaux. Cela pose des difficultés dans le contrôle / commande des moteurs électriques, notamment pour réguler la vitesse des moteurs électriques. On s'aperçoit que les procédés de régulation conventionnels aboutissent parfois à ce que l'un ou l'autre des moteurs voit son courant électrique de commande prendre des valeurs négatives, ce qui est néfaste à la stabilité de la régulation.

Selon un autre aspect, l'invention a donc pour objectif de proposer un procédé de contrôle des moteurs électrique d'entrainement des rouleaux qui permettent une régulation stable de leur vitesse.

### Exposé de l'invention

Il est proposé des machines de calandrage pour le calandrage d'un feuillard à calandrer, du type comportant un premier rouleau de travail rotatif autour d'un premier axe et un second rouleau de travail rotatif autour d'un second axe parallèle au premier axe, les deux rouleaux de travail étant contrarotatifs et définissant entre eux un espace de calandrage dans lequel le feuillard défile dans un plan de défilement selon une direction de défilement d'amont en aval. Dans le présent texte, les termes premier et second, associés aux différents rouleaux, sont purement arbitraires pour distinguer deux rouleaux qui ont la même fonctionnalité dans la machine.

Dans de tels types de machine, la machine de calandrage comporte, associés au premier rouleau de travail, au moins deux rouleaux d'appui, respectivement amont et aval, qui sont parallèles entre eux, qui sont parallèles au premier rouleau de travail et qui sont chacun en appui contre le premier rouleau de travail, chacun en une zone d'appui, respectivement amont et aval, agencées toutes les deux sur un côté du premier rouleau de travail qui est opposé à l'espace de calandrage par rapport au premier axe. Ainsi, en plus de limiter la flexion du rouleau de travail qui pourrait être engendrée par les efforts de calandrage, les rouleaux d'appui peuvent stabiliser le rouleau de travail auquel ils sont associés, notamment selon la direction de défilement. En renforçant le maintien des deux rouleaux de travail, on tend à augmenter la précision et la régularité de l'opération de calandrage.

Dans certains exemples, chaque rouleau d'appui associé au premier rouleau de travail présente une surface externe d'appui qui vient en appui sur le rouleau de travail associé, et la distance la plus courte entre la surface externe d'appui du rouleau d'appui amont et le plan de défilement est supérieure à la distance la plus courte entre la surface externe d'appui du rouleau d'appui aval et le plan de défilement. Une telle disposition augmente, selon une direction perpendiculaire au plan de défilement, l'espace libre disponible juste en amont de l'espace de calandrage, en dépit de la présence de deux rouleaux d'appui associés à ce rouleau de travail, en notamment en dépit de la présence du rouleau d'appui amont. Cet espace disponible augmenté permet par exemple de loger d'autres éléments de la machine de calandrage au plus près de l'espace de calandrage.

Dans certains exemples, la machine présente un premier plan tangent amont, tangent du côté aval à la fois au premier rouleau de travail et au rouleau d'appui amont associé, qui forme un premier angle de dégagement amont avec le plan de défilement, et un premier plan tangent aval, tangent du côté aval à la fois au premier rouleau de travail et au rouleau d'appui aval associé, qui forme un premier angle de dégagement aval avec le plan de défilement, et en ce que le premier angle de dégagement amont est supérieur au premier angle de dégagement aval. Une telle disposition contribue aussi à l'augmentation de l'espace libre disponible en amont de l'espace de calandrage, en dépit de la présence du rouleau d'appui amont.

Dans certains exemples, les zones d'appui des deux rouleaux d'appui associés au premier rouleau de travail sont écartées angulairement l'une de l'autre, autour du premier axe, d'un premier angle d'écart d'appui qui est compris dans la gamme allant de 30 à 120 degrés, de préférence dans la gamme allant de 60 à 100 degrés. Un tel écartement angulaire assure une stabilisation efficace du rouleau de travail selon la direction de défilement, tout en permettant de conserver de l'espace libre disponible en amont de l'espace de calandrage.

Dans certains exemples, les zones d'appui des deux rouleaux d'appui associés au premier rouleau de travail sont disposées symétriquement l'une par rapport à l'autre de part et d'autre d'un plan de travail comprenant le premier axe et le second axe. Une telle symétrie permet de garantir la stabilisation du rouleau de travail dans les deux sens selon la direction de défilement.

Dans certains exemples, la bissectrice du premier angle d'écart d'appui présente une direction qui est inclinée vers l'aval en s'écartant du plan de défilement. Il en résulte une dissymétrie des zones de contact par rapport au plan de travail, qui favorise l'augmentation de l'espace libre disponible en amont de l'espace de calandrage.

Dans certains exemples, les deux rouleaux d'appui associés au premier rouleau de travail sont de même diamètre. Ils ont alors une même résistance aux efforts de flexion. Au contraire, dans certains exemples, le rouleau d'appui amont associé au premier rouleau de travail présente un diamètre externe qui est inférieur au diamètre externe du rouleau d'appui aval associé au premier rouleau de travail.

Dans certains exemples, le premier rouleau de travail et les deux rouleaux d'appui associés au premier rouleau de travail sont montés chacun à rotation sur un même premier support avec un entraxe fixe entre eux. Le montage sur un même support permet de garantir la position relative des rouleaux entre eux. Dans certains de tels exemples, la machine comporte un bâti, et le premier support est mobile par rapport au bâti, perpendiculairement au plan de défilement. Ainsi, on peut régler l'épaisseur de l'espace de calandrage sans altérer la qualité de l'appui fourni par les rouleaux d'appui.

Dans certains exemples, le second axe est fixe par rapport au bâti. Cela permet dans certains cas de diminuer le nombre d'actionneurs et moyens de guidage. Au contraire, dans certains exemples, le second rouleau de travail est monté à rotation autour du second axe sur un second support qui est mobile par rapport au bâti, perpendiculairement au plan de défilement. Cela permet dans certains d'avoir un ajustement symétrique de l'épaisseur de l'espace de calandrage, sans déplacer le plan de défilement.

Dans certains exemples, la machine de calandrage comporte, associé au second rouleau de travail, un unique rouleau d'appui qui est parallèle au second rouleau de travail et qui est en appui contre le second rouleau de travail en une zone d'appui agencée sur un côté du second rouleau de travail qui est opposé à l'espace de calandrage par rapport au second axe. Cela permet dans certains cas réduire le coût de la machine.

Dans certains exemples, la machine de calandrage comporte, associés au second rouleau de travail, deux rouleaux d'appui, respectivement amont et aval, qui sont parallèles entre eux, qui sont parallèles au second rouleau de travail et qui sont chacun en appui contre le second rouleau de travail, chacun en une zone d'appui, respectivement amont et aval, agencée sur un côté du second rouleau de travail qui est opposé à l'espace de calandrage par rapport au second axe. En renforçant le maintien des deux rouleaux de travail on augmente la précision de l'opération de calandrage.

Dans certains exemples, les deux rouleaux de travail sont de même diamètre ; les deux rouleaux d'appui associés au premier rouleau de travail forment un premier groupe d'appui ; les deux rouleaux d'appui associés au second rouleau de travail forment un second groupe d'appui ; et le premier groupe d'appui et le second groupe d'appui sont symétriques l'un de l'autre de part et d'autre du plan de défilement. En ayant des groupes d'appui symétriques, on s'assure que la machine soit performante pour une grande variété d'opérations de calandrage, pouvant par exemple mettre en œuvre des feuillards de natures différentes.

Dans certains exemples, un rouleau de travail considéré est mobile par rapport au groupe d'appui associé entre une position relative rapprochée dans laquelle le rouleau de travail considéré et les deux rouleaux d'appui associés au rouleau de travail considéré sont dans une position relative de contact, et une position relative écartée dans laquelle le rouleau de travail considéré et les deux rouleaux d'appui associés au rouleau de travail considéré sont dans une position relative écartée. Cela peut par exemple faciliter des opérations de maintenance notamment de maintenance des rouleaux.

Dans certains exemples, le rouleau de travail considéré est monté rotatif sur un support de travail correspondant ; les deux rouleaux d'appui associés au rouleau de travail considéré sont montés rotatifs chacun autour de son propre axe sur un support d'appui correspondant et l'un au moins du support de travail et du support d'appui correspondant est porté par un mécanisme de guidage, par lequel le support de travail correspondant est mobile par rapport au support d'appui correspondant entre une position relative rapprochée dans laquelle le rouleau de travail considéré et les deux rouleaux d'appui associés au rouleau de travail considéré sont dans une position relative de contact, et une position relative écartée dans laquelle le rouleau de travail considéré et les deux rouleaux d'appui associés au rouleau de travail considéré sont dans leur position relative écartée. Le mécanisme de guidage permet un positionnement précis des rouleaux d'appui par rapport aux rouleaux de travail considéré.

Dans certains exemples, le support de travail correspondant au rouleau considéré est mobile, par rapport au support d'appui correspondant et par rapport à un bâti de la machine.

Dans certains exemples, le mécanisme de guidage est porté par le support d'appui correspondant au rouleau de travail considéré et le support de travail correspondant est monté sur le support d'appui correspondant par l'intermédiaire du mécanisme de guidage qui est porté par le support d'appui correspondant et qui est distinct d'un bâti de la machine. Cela permet un positionnement encore plus précis des rouleaux d'appui par rapport aux rouleaux de travail considéré.

Dans certains exemples, le rouleau de travail et le support de travail correspondant sont dépourvus de guidage direct sur le bâti de la machine, ce qui favorise cette précision.

Dans certains exemples, le support d'appui correspondant au rouleau de travail considéré est mobile par rapport au bâti et le mécanisme de guidage est mobile avec le support d'appui par rapport au bâti.

Dans certains exemples, le mécanisme de guidage est porté par le bâti de la machine et le support de travail est monté sur le bâti par l'intermédiaire du mécanisme de guidage. Cela permet un positionnement précis des rouleaux d'appui par rapport aux rouleaux de travail considéré, mais ici avec une grande rigidité, qui limite les risques de déformation sous efforts importants.

Dans certains exemples, le mécanisme de guidage autorise un unique degré de liberté du premier support de travail par rapport au premier support d'appui.

Dans certains exemples, le premier mécanisme de guidage autorise uniquement une translation du premier support de travail par rapport au premier support d'appui selon une direction radiale perpendiculaire au premier axe et parallèle à un plan de calandrage contenant les deux axes des deux rouleaux de travail. Cela permet de réaliser à coût raisonnable un mécanisme de guidage rigide et précis.

Il est par ailleurs proposé différents procédés de calandrage d'un feuillard à calandrer, du type dans lequel on provoque le défilement du feuillard, dans un plan de défilement selon une direction de défilement d'amont en aval, au travers d'un espace de calandrage défini entre un premier rouleau de travail rotatif autour d'un premier axe et un second rouleau de travail rotatif autour d'un second axe parallèle au premier axe, les deux rouleaux de travail étant contrarotatifs.

Dans de tels types de procédé, le procédé comporte l'application, sur le premier rouleau de travail, d'au moins deux rouleaux d'appui, respectivement amont et aval, qui sont parallèles entre eux, qui sont parallèles au premier rouleau de travail et qui sont chacun en appui contre le premier rouleau de travail, chacun en une zone d'appui, respectivement amont et aval, agencées toutes les deux sur un côté du premier rouleau de travail qui est opposé à l'espace de calandrage par rapport au premier axe.

Dans certains exemples de tels procédés, chaque rouleau d'appui associé au premier rouleau de travail présente une surface externe d'appui qui vient en appui sur le rouleau de travail associé, et les deux rouleaux d'appuis sont appliqués sur le rouleau de travail de telle sorte que la distance la plus courte entre la surface externe d'appui du rouleau d'appui amont et le plan de défilement est supérieure à la distance la plus courte entre la surface externe d'appui du rouleau d'appui aval et le plan de défilement.

Dans certains exemples de tels procédés, les zones d'appui des deux rouleaux d'appui associés au premier rouleau de travail sont écartées angulairement l'une de l'autre, autour du premier axe, d'un premier angle d'écart d'appui qui est compris dans la gamme allant de 30 à 120 degrés, de préférence dans la gamme allant de 60 à 100 degrés.

Dans certains exemples de tels procédés, les zones d'appui des deux rouleaux d'appui associés au premier rouleau de travail sont disposées symétriquement l'une par rapport à l'autre de part et d'autre d'un plan de travail comprenant le premier axe et le second axe.

Dans certains exemples de tels procédés, la bissectrice du premier angle d'écart d'appui présente une direction qui est inclinée vers l'aval en s'écartant du plan de défilement.

Dans certains exemples de tels procédés, les deux rouleaux d'appui associés au premier rouleau de travail sont de même diamètre.

Dans certains exemples de tels procédés, le rouleau d'appui amont associé au premier rouleau de travail présente un diamètre externe qui est inférieur au diamètre externe du rouleau d'appui aval associé au premier rouleau de travail.

Dans certains exemples de tels procédés, le premier rouleau de travail et les deux rouleaux d'appui associés au premier rouleau de travail ont un entraxe fixe entre eux.

Dans certains exemples de tels procédés, le premier rouleau de travail et les deux rouleaux d'appui associés au premier rouleau de travail sont mobiles solidairement, perpendiculairement au plan de défilement.

Dans certains exemples de tels procédés, le second axe est fixe.

Dans certains exemples de tels procédés, le second rouleau de travail est mobile, perpendiculairement au plan de défilement.

Dans certains exemples de tels procédés, le procédé de calandrage comporte l'application, en appui contre le second rouleau de travail, d'un unique rouleau d'appui qui est associé au second rouleau de travail, qui est parallèle au second rouleau de travail, et qui est en en appui contre le second rouleau de travail une zone d'appui agencée sur un côté du second rouleau de travail qui est opposé à l'espace de calandrage par rapport au second axe.

Dans certains exemples de tels procédés, le procédé de calandrage comporte l'application, en appui contre le second rouleau de travail, de deux rouleaux d'appui, respectivement amont et aval, qui sont associés au second rouleau de travail, qui sont parallèles entre eux, qui sont parallèles au second rouleau de travail et qui sont chacun en appui contre le second rouleau de travail, chacun en une zone d'appui, respectivement amont et aval, agencées toutes les deux sur un côté du second rouleau de travail qui est opposé à l'espace de calandrage par rapport au second axe.

Dans certains exemples de tels procédés, les deux rouleaux de travail sont de même diamètre ; les deux rouleaux d'appui associés au premier rouleau de travail forment un premier groupe d'appui ; les deux rouleaux d'appui associés au second rouleau de travail forment un second groupe d'appui, et le premier groupe d'appui et le second groupe d'appui sont symétriques l'un de l'autre de part et d'autre du plan de défilement.

Dans certains exemples de telles machines ou de tels procédés, le feuillard à calandrer est un composant d'électrode pour des cellules électrochimiques, comprenant une couche de matériau d'électrode, notamment un composant d'électrode comprenant une couche de matériau d'électrode supportée sur une couche support ou une couche de matériau d'électrode auto-supportée.

Dans certains exemples de telles machines ou de tels procédés, la couche de matériau d'électrode est, dans le procédé de calandrage, calandrée seule ou sur une couche support, éventuellement avec apport de chaleur, pour donner de la cohésion à la couche de matériau d'électrode, et/ou pour lui conférer des propriétés de structuration souhaitées, et/ou pour lui conférer des propriétés de tribologie et/ou de rhéologie souhaitées, et/ou pour lui conférer des propriétés dimensionnelles souhaitées et/ou pour assembler la couche de matériau d'électrode sur une couche support.

### Brève description des dessins

[Fig. 1] : La Figure 1 est une vue schématique illustrant un exemple d'une machine de calandrage.
[Fig. 2] : La Figure 2 est une vue schématique illustrant plus particulièrement une première configuration d'un groupe de calandrage d'une machine de calandrage, comprenant deux rouleaux d'appui pour chaque rouleau de travail, un rouleau de travail étant mobile par rapport à un bâti de la machine selon une direction perpendiculaire au plan de défilement.
[Fig. 3] : La Figure 3 est une vue schématique illustrant plus particulièrement une autre configuration d'un groupe de calandrage d'une machine de calandrage, dans lequel les deux rouleaux de travail sont mobiles par rapport à un bâti de la machine, perpendiculairement au plan de défilement.
[Fig. 4] : La Figure 4 est une vue schématique illustrant plus particulièrement une autre configuration d'un groupe de calandrage d'une machine de calandrage, comprenant, associés à un premier rouleau de travail, deux rouleaux d'appui, et, associé à un second rouleau de travail, un unique rouleau d'appui.
[Fig. 5] : La Figure 5 est une vue schématique illustrant plus particulièrement une autre configuration d'un groupe de calandrage d'une machine de calandrage, comprenant des groupes d'appui décalés vers l'aval.
[Fig. 6] : La Figure 6 est une vue schématique illustrant plus particulièrement une autre configuration d'un groupe de calandrage d'une machine de calandrage, comprenant des groupes d'appui ayant, associés à un rouleau travail donné, des rouleaux d'appui de diamètres différents.
[Fig. 7] : La Figure 7 est une vue schématique illustrant plus particulièrement une autre configuration d'un groupe de calandrage d'une machine de calandrage, dans lequel le groupe de calandrage, similaire à celui de la Figure 5, présente un plan de défilement incliné par rapport à la verticale et par rapport à l'horizontale.
[Fig. 8] : La Figure 8 est une vue schématique illustrant plus particulièrement une autre configuration d'un groupe de calandrage d'une machine de calandrage dans lequel le groupe de calandrage, similaire à celui de la Figure 6, présente un plan de défilement incliné par rapport à la verticale et par rapport à l'horizontale.
[Fig. 9] : La Figure 9 est une vue schématique illustrant plus particulièrement une autre configuration d'un groupe de calandrage d'une machine de calandrage, dans lequel le groupe de calandrage, similaire à celui de la Figure 5 est associé à une filière d'extrusion reçue au moins en partie entre deux rouleaux d'appui amont du groupe de calandrage.
[Fig. 10] : La Figure 10 est une vue schématique illustrant plus particulièrement une autre configuration d'un groupe de calandrage d'une machine de calandrage, dans lequel le groupe de calandrage, similaire à celui de la Figure 6 est associé à une filière d'extrusion reçue au moins en partie entre deux rouleaux d'appui amont du groupe de calandrage.
[Fig. 11] : La Figure 11 est un diagramme illustrant un exemple d'un procédé de calandrage.
[Fig. 12] La Figure 12 est une vue schématique illustrant un autre exemple d'une machine de calandrage, comprenant deux rouleaux d'appui pour chaque rouleau de travail, chaque rouleau de travail étant mobile par rapport aux rouleaux d'appui associés à ce rouleau de travail, selon une direction perpendiculaire au plan de défilement, ici illustré dans une position relative écartée.
[Fig. 13] La Figure 13 est une vue schématique illustrant l'exemple de machine de calandrage de la Figure 12, chaque rouleau de travail étant dans une position relative d'appui contre les rouleaux d'appui associés à ce rouleau de travail.
[Fig. 14] La Figure 14 est une vue schématique illustrant un autre exemple d'une machine de calandrage, comprenant deux rouleaux d'appui pour chaque rouleau de travail, chaque rouleau de travail étant mobile par rapport aux rouleaux d'appui associés à ce rouleau de travail, selon une direction perpendiculaire au plan de défilement, ici illustré dans une position relative écartée, avec des moyens de guidage des rouleaux de travail directement par rapport au bâti.
[Fig. 15] : La Figure 15 est un schéma illustrant un circuit de contrôle de la rotation d'un rouleau de travail et d'un rouleau d'appui associé, mécaniquement liés en rotation notamment par leur contact, d'une machine de calandrage selon un exemple de réalisation.
[Fig. 16] : La Figure 16 est un schéma illustrant un circuit de contrôle de la rotation de deux rouleaux de travail d'une machine de calandrage selon un exemple de réalisation.
[Fig. 17] : La Figure 17 est un schéma illustrant un autre circuit de contrôle de la rotation d'un rouleau de travail avec deux rouleaux d'appui associés, et d'un autre rouleau de travail, mécaniquement lié en rotation avec le premier rouleau de travail, d'une machine de calandrage.
[Fig. 18] : La Figure 18 est un schéma illustrant un circuit de contrôle de la rotation des deux rouleaux de travail et des deux rouleaux d'appui associés à chaque rouleau de travail, d'une machine de calandrage selon un exemple de réalisation.
[Fig. 19] : La Figure 19 est un diagramme illustrant un exemple de procédé de contrôle de la rotation des rouleaux d'une machine de calandrage.
[Fig. 20] : La Figure 20 est un diagramme illustrant un autre exemple de procédé de contrôle de la rotation des rouleaux d'une machine de calandrage.
[Fig. 21] : La Figure 21 est une illustration schématique d'un exemple d'une installation de production en continu d'un film formé d'une couche auto-supportée d'un matériau obtenu par calandrage d'une poudre.

### Description détaillée

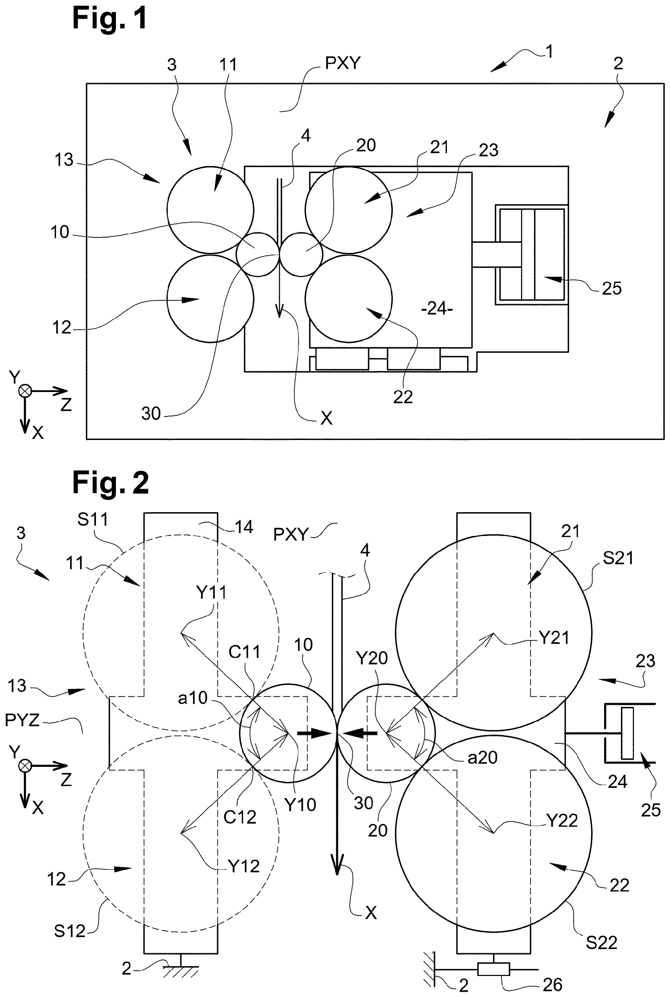

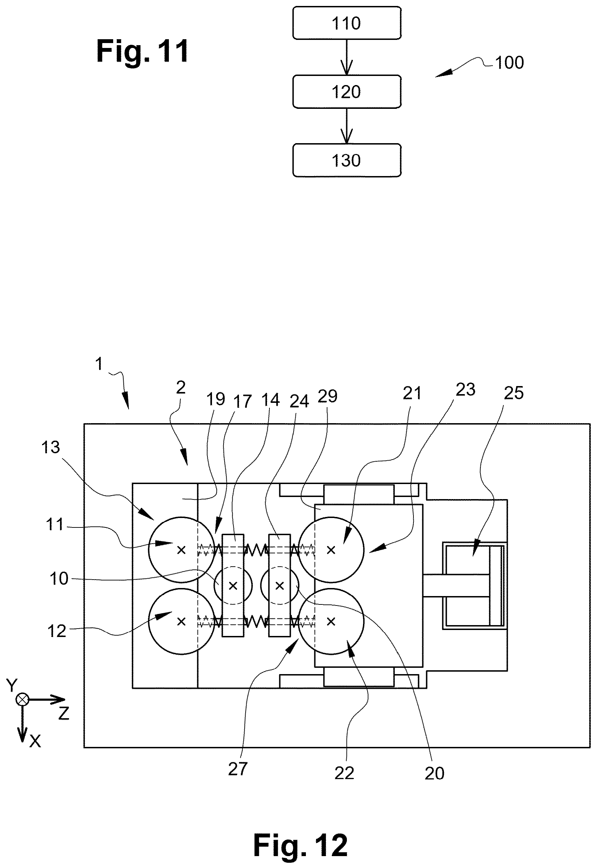

On a illustré sur la figure 1 une machine de calandrage 1 comprenant au moins un bâti 2 et au moins un groupe de calandrage 3. La machine de calandrage 1 est configurée pour être utilisée pour le calandrage d'un feuillard 4 que l'on veut calandrer. D'autres exemples seront par ailleurs décrits en référence aux Figures 12, 13 et 14.

Dans l'exemple, le feuillard 4 est un composant de cellule électrochimique, notamment un composant d'électrode pour des cellules électrochimiques, tout particulièrement pour des cellules électrochimiques de batterie d'accumulateurs électriques, notamment de type lithium-ion.

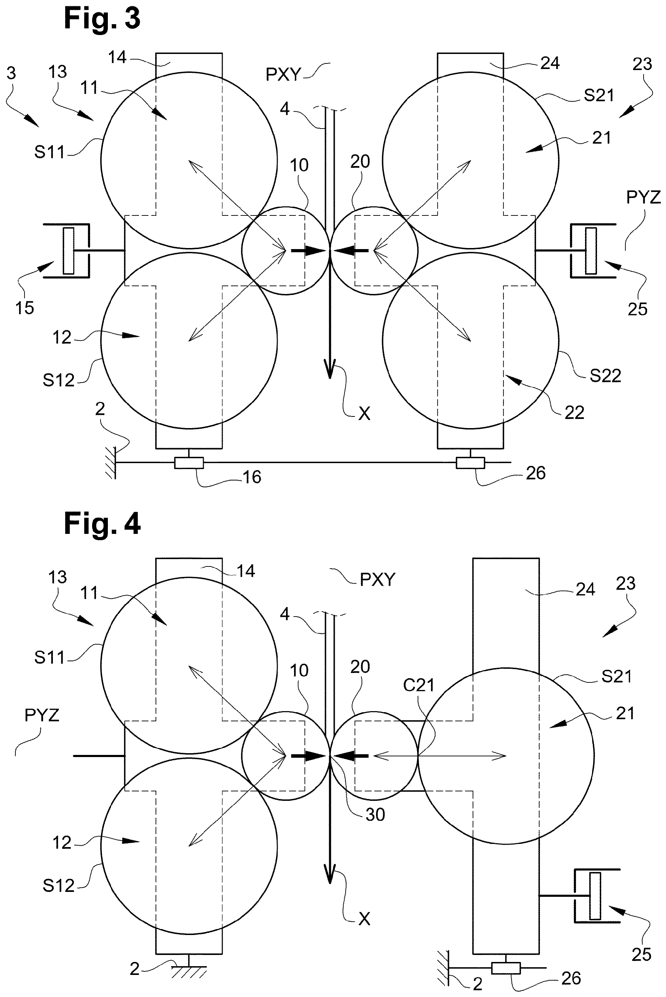

Un premier exemple d'un groupe de calandrage 3 pour une telle machine de calandrage 1 est illustré à la Figure 2. D'autres exemples d'un groupe de calandrage 3 sont aussi illustrés dans les Figures 3 à 10 et aux Figures 12, 13 et 14.

Dans tous les exemples illustrés, le groupe de calandrage 3 de la machine de calandrage 1 comporte un premier rouleau de travail 10 qui est rotatif autour d'un premier axe Y10 et un second rouleau de travail 20 qui est rotatif autour d'un second axe Y20, le second axe Y20 étant parallèle au premier axe Y 10 du premier rouleau de travail 10, dans les limites des tolérances de fabrication habituelles dans le domaine. Ce parallélisme est observé plus particulièrement en fonctionnement de la machine lors d'une opération de calandrage, lors les efforts de fonctionnement s'appliquent sur les rouleaux.

Dans les exemples illustrés, les deux rouleaux de travail 10, 20 sont contrarotatifs et ils définissent entre eux un espace de calandrage 30 dans lequel le feuillard 4 défile dans un plan de défilement PXY selon une direction de défilement X, dans un sens allant d'amont en aval selon cette direction. Le plan de défilement est parallèle au premier axe Y10 du premier rouleau de travail 10 et au second axe Y20 du second rouleau de travail 20. Dans ce plan de défilement PXY, la direction de défilement X est perpendiculaire à une direction transversale Y qui est parallèle au premier axe Y10 du premier rouleau de travail 10 et au second axe Y20 du second rouleau de travail 20.

Le feuillard 4 peut être composé d'une unique feuille, ou d'une superposition d'au moins deux feuilles accolées l'une à l'autre face contre face. Le feuillard 4 peut être un feuillard discret, ayant une longueur définie dans la direction de défilement, cette longueur étant dans l'ordre de grandeur de sa largeur selon une direction transversale parallèle aux axes Y10, Y20 des rouleaux de travail 10, 20, par exemple une longueur comprise en 0,1 et 10 fois la largeur. Alternativement, le feuillard 4 peut présenter une longueur « infinie » au sens d'une longueur supérieure à 10 fois sa largeur. A titre d'exemple, le feuillard peut, en amont et/ou en aval de la machine de calandrage 1, être enroulé sous la forme d'un rouleau.

Dans les applications de fabrication de composants de cellules électrochimiques, le feuillard 4 peut présenter une épaisseur qui, à l'entrée du groupe de calandrage 3, donc en amont de celui-ci selon la direction de défilement X, est par exemple comprise dans la gamme allant de 0,05 mm à 2 mm. Généralement, l'espace de calandrage 30 présente, à son endroit d'écartement minimal selon la direction Z perpendiculaire au plan de défilement PXY, un écartement entre les deux rouleaux de travail qui est du même ordre que l'épaisseur du feuillard 4 à l'entrée du groupe de calandrage 3, tout en étant inférieure à celle-ci, par exemple en étant égale à une valeur dans la gamme de 95 % à 10 % de l'épaisseur du feuillard 4 à l'entrée du groupe de calandrage 3, de préférence dans la gamme de 90% à 60% de l'épaisseur du feuillard 4 à l'entrée du groupe de calandrage 3. L'écartement entre les deux rouleaux de travail 10, 20 est la distance minimale entre les surfaces cylindriques externes des deux rouleaux de travail 10, 20.

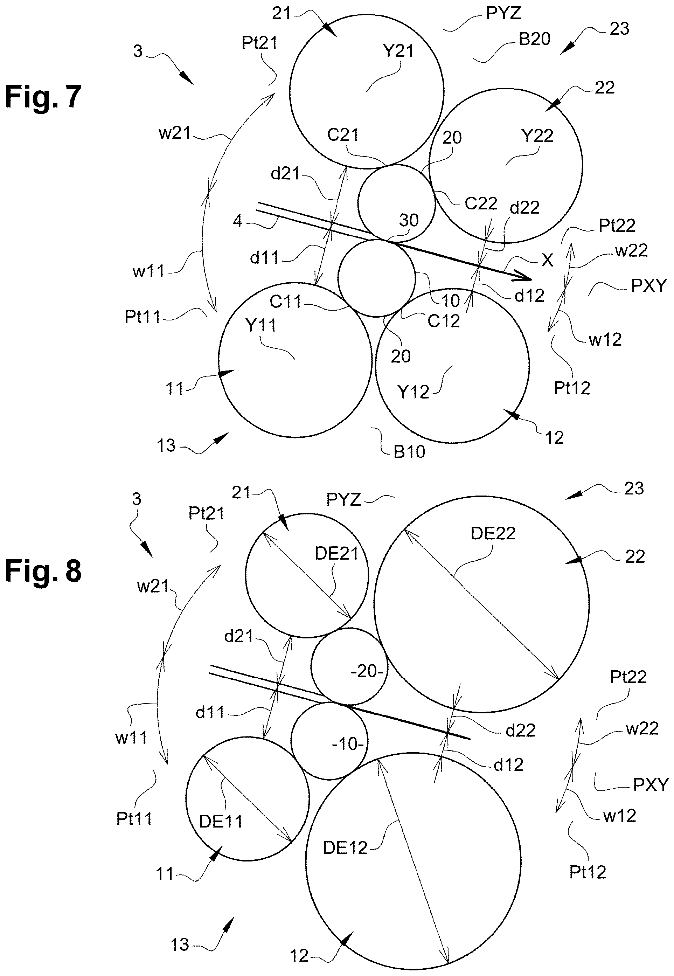

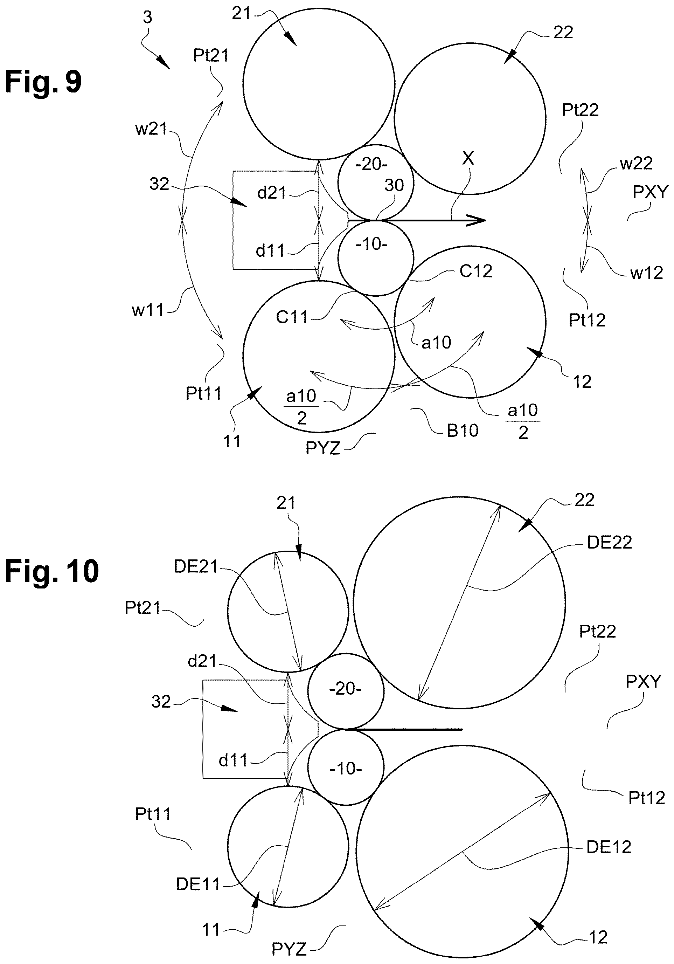

L'orientation dans l'espace, par rapport à la direction de la gravité terrestre, des différentes directions pourra varier en fonction des applications et des installations. À titre d'exemple, il peut être considéré que, dans tous les exemples illustrés, la direction Y des axes Y10, Y20 des deux rouleaux de travail 10, 20 est horizontale. Dans les exemples des figures 1 à 6, il peut être considéré que la direction de défilement X est verticale. Cependant, la même machine de calandrage et le même groupe de calandrage 3 peuvent être mis en œuvre avec une orientation différente par rapport à la direction de la gravité terrestre. À titre d'exemple, il peut être considéré que dans l'exemple des Figures 9 et 10, la direction de défilement X est horizontale, tandis que la direction transversale Y des axes Y10, Y20 des deux rouleaux de travail 10, 20 est elle aussi horizontale. Cependant, les exemples des Figures 9 et 10 peuvent être mis en œuvre avec une direction de défilement X verticale, la direction transversale Y des axes Y10, Y20 des deux rouleaux de travail 10, 20 étant de préférence horizontale. Toujours à titre d'exemple, il peut être considéré que dans l'exemple des Figures 7 et 8, la direction de défilement X est inclinée par rapport à l'horizontale d'un angle d'inclinaison qui est inférieur à 90 degrés, et qui peut par exemple être compris dans la gamme à allant de 5 à 45 degrés, tandis que la direction transversale Y des axes Y10, Y20 des deux rouleaux de travail 10, 20 est horizontale.

De préférence, chaque rouleau de travail 10, 20 est entraîné en rotation autour de son axe Y10, Y20 par des moyens d'entraînement non représentés sur les figures. Ces moyens d'entraînement peuvent comprendre un moteur, notamment un moteur électrique. Un tel moteur peut être disposé coaxialement selon l'axe du rouleau de travail considéré, par exemple à une extrémité axiale du rouleau de travail considéré, dans le prolongement de celui-ci. Alternativement, un tel moteur peut être disposé dans une position décalée par rapport à l'axe du rouleau de travail considéré, et peut être relié à celui-ci par un mécanisme de transmission comprenant par exemple une chaîne, une courroie, et/ou une cascade d'engrenages. Dans certains exemples, on a ainsi le premier rouleau de travail 10 qui est entraîné en rotation autour de son axe Y10 par un premier moteur de travail M10, typiquement un moteur électrique, et le second rouleau de travail 20 qui est entraîné en rotation autour de son axe Y20 par un second moteur de travail M20, typiquement un moteur électrique. Dans certains modes de réalisation un ou plusieurs des moteurs électriques mis en œuvre pour l'entrainement des rouleaux peut être un moteur électrique pas-à-pas, un moteur électrique asynchrone multiphasé, ou un moteur électrique synchrone.

De manière connue, la machine de calandrage 1 comporte, associé à au moins l'un des rouleaux de travail 10, 20, un groupe d'appui 13, 23 comprenant au moins un rouleau d'appui 11, 12, 21, 22. De préférence, comme dans les exemples illustrés, chaque rouleau de travail 10, 20 est associé à un groupe d'appui 13, 23 comprenant au moins un rouleau d'appui 11, 12, 21, 22 en appui sur le rouleau de travail considéré.

De manière générale, un rouleau d'appui d'un groupe d'appui 13, 23, associé un rouleau de travail 10, 20 considéré, est parallèle au rouleau de travail considéré et est en appui contre ce rouleau de travail en une zone d'appui qui est agencée sur un côté du rouleau de travail qui est opposé à l'espace de calandrage 30 par rapport à l'axe de ce rouleau de travail. Le groupe d'appui 13, 23 a pour fonction de limiter ou compenser les déformations inévitables du rouleau de travail 10, 20 en fonctionnement lors d'une opération de calandrage.

Dans la limite des tolérances de fabrication habituelles dans le domaine, le rouleau d'appui est parallèle au rouleau de travail associé et est en appui sur ce dernier dans une zone d'appui en forme de ligne droite parallèle à l'axe du rouleau de travail considéré, tout du moins lorsque la machine de calandrage est en fonctionnement lors d'une opération de calandrage d'un feuillard, avec pour objectif d'avoir une maîtrise de l'épaisseur de l'espace de calibrage 30, sur toute la longueur axiale des rouleaux de travail, afin d'obtenir un traitement homogène du feuillard 4 sur toute la direction axiale Y de celui-ci.

De même, dans la limite des tolérances de fabrication habituelles dans le domaine, le rouleau de travail et le rouleau d'appui associé sont des cylindres de révolution à génératrice rectiligne. Cependant, l'homme du métier de la conception des machines calandrage sait que, pour une bonne maîtrise de cet espace de calibrage 30, il peut être avantageux de prévoir qu'au moins l'un du rouleau de travail ou l'un rouleau d'appui associé, de préférence le rouleau d'appui, présente une géométrie légèrement bombée, en forme de tonneau, afin de compenser en tout ou en partie une éventuelle flexion du rouleau de travail lors d'une opération de calandrage.

De même, le rouleau d'appui d'un groupe d'appui 13, 23 est dans de nombreux cas un rouleau continu sur toute sa direction axiale. Cependant, l'homme du métier sait qu'un rouleau d'appui considéré peut être segmenté en différents segments de rouleau, alignés successivement sur la longueur de l'axe du rouleau d'appui.

Selon un aspect particulièrement avantageux, il a été illustré que, dans tous les exemples illustrés, le groupe de calandrage 3 de la machine de calandrage 1 comporte au moins un premier groupe d'appui 13 ayant, associés au premier rouleau de travail 10, au moins deux rouleaux d'appui, respectivement amont 11 et aval 12, qui sont parallèles entre eux, qui sont parallèles au premier rouleau de travail 10, et qui sont chacun en appui contre le premier rouleau de travail 10, chacun en une zone d'appui, respectivement amont C11 et aval C12, agencées toutes les deux sur un côté du premier rouleau de travail 10 qui est opposé à l'espace de calandrage 30 par rapport au premier axe Y10. Autrement dit, pour chaque zone d'appui, respectivement amont C11 et aval C12, l'angle formé, autour de l'axe du rouleau de travail, entre la position de la zone d'appui et la position de l'espace de calandrage 30, est supérieur à 90 degrés d'angle.

Dans la direction de défilement X, le rouleau d'appui amont 11 est situé en amont de l'espace de calandrage 30, tandis que le rouleau d'appui aval 12 est situé en aval de l'espace de calandrage 30.

En prévoyant que le rouleau de travail soit associé à au moins deux rouleaux d'appui, on peut grandement améliorer la stabilité du rouleau de travail selon une direction perpendiculaire au plan de défilement. Cette stabilité permet d'accroitre non seulement la stabilité contre un éventuel déplacement ou une éventuelle déflexion continue ou quasi continue lors des phases de production, mais aussi d'accroitre la résistance à des déplacements ou déflexions de nature vibratoire lors des phases de production. Un tel accroissement de la stabilité du rouleau de travail selon une direction perpendiculaire au plan de défilement permet d'accroitre la qualité du contrôle de l'écartement des deux rouleaux de travail dans l'espace de calandrage, au bénéfice de la qualité de l'opération de calandrage.

Bien entendu, dans une variante non représentée, la machine de calandrage 1 peut comporter au moins un premier groupe d'appui ayant, associés au premier rouleau de travail, plus de deux rouleaux d'appui, dont au moins un troisième rouleau d'appui en plus du rouleau d'appui amont et du rouleau d'appui aval, qui sont parallèles entre eux, qui sont parallèles au premier rouleau de travail, et qui sont chacun en appui contre le premier rouleau de travail, chacun en une zone d'appui. Par exemple, le premier groupe d'appui peut comporter un troisième rouleau d'appui en appui contre le premier rouleau de travail en une zone d'appui intermédiaire agencée entre la zone d'appui amont C11 et la zone d'appui aval C12. Dans certains modes de réalisation la zone d'appui intermédiaire est par exemple agencée dans un plan de travail PYZ comprenant le premier axe Y10 et le second axe Y20. Dans d'autres modes de réalisation, la zone d'appui intermédiaire est par exemple décalée par rapport au plan de travail PYZ comprenant le premier axe Y10 et le second axe Y20.

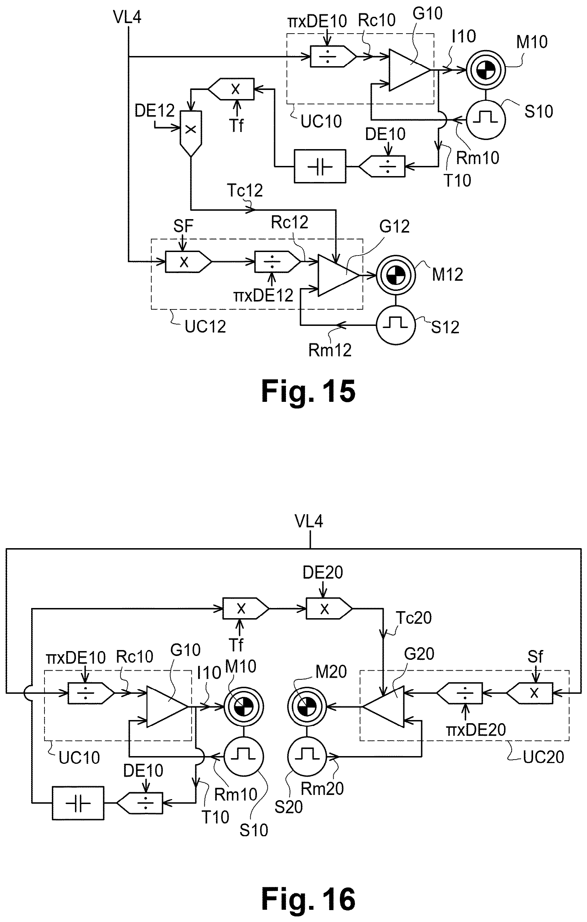

De préférence, chaque rouleau d'appui 11, 12 du premier groupe d'appui 13 est entraîné en rotation autour de son axe Y11, Y12 par des moyens d'entraînement non représentés sur les figures 1 à 15, mais illustrés sur les Figures 16 à 18. Ces moyens d'entraînement peuvent comprendre un moteur, notamment un moteur électrique M11, M12. Un tel moteur peut être disposé coaxialement selon l'axe du rouleau d'appui considéré, par exemple à une extrémité axiale du rouleau de d'appui considéré, dans le prolongement de celui-ci. Alternativement, un tel moteur peut être disposé dans une position décalée par rapport à l'axe du rouleau d'appui considéré, et peut être relié à celui-ci par un mécanisme de transmission comprenant par exemple une chaîne, une courroie, et/ou une cascade d'engrenages. Dans certains exemples, on a ainsi le premier rouleau d'appui amont 11 qui est entraîné en rotation autour de son axe Y11 par un premier moteur d'appui amont M11, typiquement un moteur électrique, et le premier rouleau d'appui aval 12 qui est entraîné en rotation autour de son axe Y12 par un premier moteur d'appui aval M12, typiquement un moteur électrique. Dans certains modes de réalisation un ou plusieurs des moteurs électriques mise en œuvre pour l'entrainement des rouleaux peut être un moteur électrique pas-à-pas, un moteur électrique asynchrone multiphasé, ou un moteur électrique synchrone.

Dans tous les exemples illustrés, à l'exception de l'exemple de la Figure 4, le groupe de calandrage 3 de la machine de calandrage 1 comporte un second groupe d'appui 23 ayant, associés au second rouleau de travail 20, deux rouleaux d'appui, respectivement amont 21 et aval 22, qui sont parallèles entre eux, qui sont parallèles au second rouleau de travail 20 et qui sont chacun en appui contre le premier rouleau de travail 10, chacun en une zone d'appui, respectivement amont C21 et aval C22, agencées toutes les deux sur un côté du second rouleau de travail 20 qui est opposé à l'espace de calandrage 30 par rapport au second axe Y20. Autrement dit, pour chaque zone d'appui, respectivement amont C21 et aval C22, l'angle formé, autour de l'axe du rouleau de travail, entre la position de la zone d'appui et la position de l'espace de calandrage 30, est supérieur à 90 degrés d'angle.

Dans la direction de défilement X, le rouleau d'appui amont 21 est situé en amont de l'espace de calandrage 30, tandis que le rouleau d'appui aval 22 est situé en aval de l'espace de calandrage 30.

De préférence, chaque rouleau d'appui 21, 22 du second groupe d'appui 23 est entraîné en rotation autour de son axe Y21, Y22 par des moyens d'entraînement non représentés sur les figures 1 à 15, mais illustrés sur les Figures 16 à 18. Ces moyens d'entraînement peuvent comprendre un moteur, notamment un moteur électrique. Un tel moteur peut être disposé coaxialement selon l'axe du rouleau d'appui considéré, par exemple à une extrémité axiale du rouleau de d'appui considéré, dans le prolongement de celui-ci. Alternativement, un tel moteur peut être disposé dans une position décalée par rapport à l'axe du rouleau d'appui considéré, et peut être relié à celui-ci par un mécanisme de transmission comprenant par exemple une chaîne, une courroie, et/ou une cascade d'engrenages. Dans certains exemples, on a ainsi le second rouleau d'appui amont 21 qui est entraîné en rotation autour de son axe Y21 par un second moteur d'appui amont M21, typiquement un moteur électrique, et le second rouleau d'appui aval 22 qui est entraîné en rotation autour de son axe Y22 par un second moteur d'appui aval M22, typiquement un moteur électrique.

Dans tous les exemples illustrés à l'exception de l'exemple de la Figure 4, le premier groupe d'appui 13 et le second groupe d'appui 23 sont symétriques l'un de l'autre de part et d'autre du plan de défilement PXY. Cette symétrie comprend bien entendu que le nombre de rouleaux d'appui de chaque groupe d'appui 13, 23, qui est identique pour les deux groupes d'appui 13, 23. Cette symétrie comprend aussi que la position des axes des rouleaux d'appui est symétrique de part et d'autre du plan de défilement PXY. Cette symétrie comprend encore que le diamètre externe d'un rouleau d'appui est identique au diamètre externe du rouleau d'appui correspondant dans la symétrie.

Dans certaines applications, on peut prévoir que le premier groupe d'appui 13 et le second groupe d'appui 23 ne sont pas symétriques, ou en tout cas pas entièrement symétriques l'un de l'autre de part et d'autre du plan de défilement PXY.

Dans l'exemple de la Figure 4, la machine de calandrage comporte un second groupe d'appui 23 ayant, associé au second rouleau de travail 20, un unique rouleau d'appui 21 qui est parallèle au second rouleau de travail 20 et qui est en appui contre le second rouleau de travail 20 en une zone d'appui C21 qui est agencée sur un côté du second rouleau de travail 20 qui est opposé à l'espace de calandrage par rapport au second axe Y20. Par exemple, la zone d'appui C21 de l'unique rouleau d'appui 21 sur le second rouleau de travail 20 est diamétralement à l'opposé de l'espace de calandrage 30 par rapport au second axe Y20.

Dans les exemples illustrés, les zones d'appui C11, C12, respectivement C21, C22, des deux rouleaux d'appui 11, 12, respectivement 21, 22, associés au premier, respectivement second, rouleau de travail sont écartées angulairement l'une de l'autre, autour du premier axe Y10, respectivement autour du second axe Y20, d'un premier angle d'écart d'appui a10, respectivement d'une second angle d'écart d'appui a20, qui est de préférence compris dans la gamme allant de 30 à 120 degrés, plus préférentiellement dans la gamme allant de 60 à 100 degrés. Un tel angle permet d'obtenir une bonne stabilité du rouleau de travail selon une direction perpendiculaire au plan de défilement. Dans la gamme de valeurs considérées, plus l'angle d'écart d'appui a10, a20 est grand, plus on peut mettre en œuvre des rouleaux d'appui de plus grand diamètre, au bénéfice de leur rigidité et donc de leur résistance aux déformations. Dans la gamme de valeurs considérées, en conservant l'angle d'écart d'appui a10, a20 inférieur ou égal à la borne supérieure de la gamme, on limite le risque d'apparition d'efforts parasites par effet de coin, c'est-à-dire d'efforts apparaissant par un engagement excessif du rouleau de travail entre les deux rouleaux d'appui.

Dans certains modes de réalisation, comme illustré par exemple sur les Figures 2 et 4, le premier rouleau de travail 10 et les deux rouleaux d'appui 11, 12 associés au premier rouleau de travail 10 sont montés chacun à rotation autour de leurs axes respectifs Y11, Y12 qui occupent une position fixe par rapport au bâti 2 de la machine. Le premier rouleau de travail 10 et les deux rouleaux d'appui 11, 12 ont par exemple dans ce cas un entraxe fixe entre eux, tout du moins pendant une phase de production au cours de laquelle la machine est en fonctionnement pour traiter un feuillard afin de lui conférer les propriétés voulues. On note que, même dans le cas d'un premier rouleau de travail 10 et de ses deux rouleaux d'appui 11, 12 associés ayant un entraxe fixe entre eux en phase de production, on pourra prévoir avantageusement des moyens de réglages de leur position relative, pour un réglage statique de leur position relative permettant d'assurer le contact requis entre le premier rouleau de travail 10 et ses deux rouleaux d'appui 11, 12 associés. Un tel réglage statique sera par exemple effectué dans une phase de réglage de la machine, de préférence en dehors d'une phase de production.

Dans le mode de réalisation de la Figure 3, le premier rouleau de travail 10 et les deux rouleaux d'appui 11, 12 associés au premier rouleau de travail 10 sont montés chacun à rotation sur un même premier support 14 avec un entraxe fixe entre eux, et le premier support 14 est mobile par rapport au bâti 2, perpendiculairement au plan de défilement PXY. Ainsi, le premier rouleau de travail 10 et les deux rouleaux d'appui 11, 12 associés au premier rouleau de travail 10 sont mobiles solidairement, notamment par rapport au bâti 2, perpendiculairement au plan de défilement PXY. Par exemple, le premier support 14 est relié au bâti 2 par une glissière 16. Dans l'exemple illustré, la glissière 16 permet une translation du premier support 14, et donc du premier rouleau de travail 10 et ses deux rouleaux d'appui 11, 12 associés, selon une direction de translation perpendiculaire au plan de défilement PXY. Dans cet exemple, une telle glissière 16 permet un déplacement purement selon la direction de translation perpendiculaire au plan de défilement PXY. Cependant, d'autres types de liaison mécanique entre le premier support 14 et le bâti peuvent être prévus, qui assurent non pas un déplacement purement selon la direction de translation perpendiculaire au plan de défilement PXY, mais un déplacement ayant une composante selon la direction de translation perpendiculaire au plan de défilement PXY, de préférence une composante majoritaire. Une telle liaison mécanique peut par exemple être une liaison mécanique à parallélogramme, à excentrique, etc...

Même dans le cas d'un premier rouleau de travail 10 et de ses deux rouleaux d'appui 11, 12 associés montés avec un entraxe fixe entre eux sur un premier support 14 mobile par rapport au bâti 2, on prévoira avantageusement des moyens de réglages de leur position relative, pour un réglage statique de leur position relative comme décrit ci-dessus.

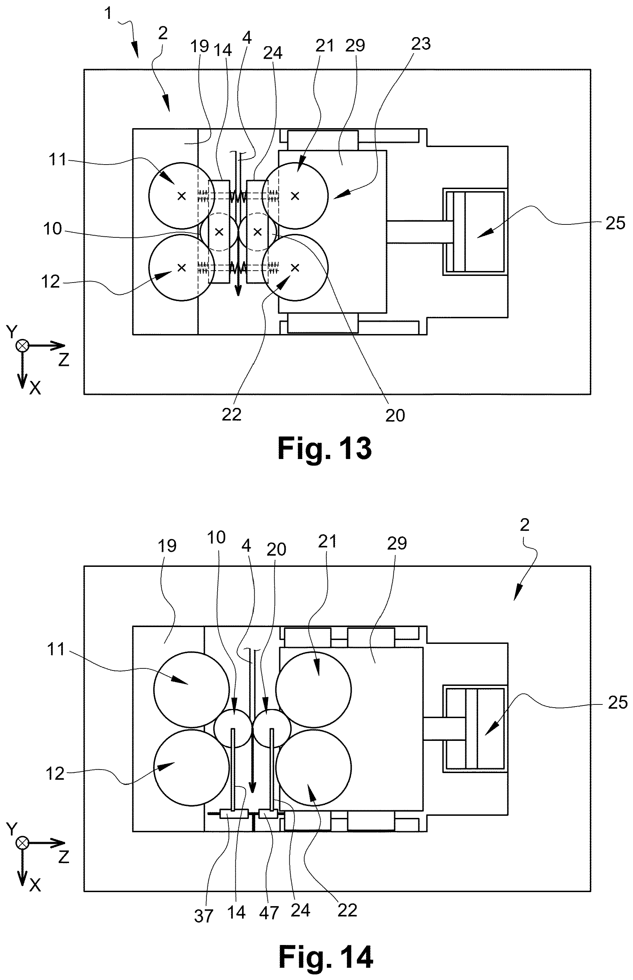

Dans les modes de réalisation des Figures 12 à 14, on a illustré deux exemples de machines dans lesquelles le premier rouleau de travail 10 est mobile par rapport au premier groupe d'appui 13 entre une position relative rapprochée, qui est illustrée à la Figure 13 pour un premier exemple et à la Figure 14 pour le deuxième exemple, dans laquelle le premier rouleau de travail 10 et les deux rouleaux d'appui 11, 12 associés au premier rouleau de travail 10 sont dans une position relative de contact, ce qui correspond par exemple à une position relative de travail de la machine, et une position relative écartée, qui est illustrée seulement pour le premier exemple à la Figure 12, dans laquelle le premier rouleau de travail 10 et les deux rouleaux d'appui 11, 12 associés au premier rouleau de travail (10) sont dans une position relative écartée, ce qui correspond par exemple à une position relative de repos et/ou de maintenance de la machine.

Dans tous les modes de résiliation illustrés, au moins l'un des deux rouleaux de travail 10, 20 est mobile par rapport au bâti 2 de la machine, donc mobile par rapport à l'autre rouleau de travail. Bien entendu, le groupe d'appui 13, 23 associé à un rouleau de travail 10, 20 mobile par rapport au bâti 2, comprenant un unique rouleau d'appui ou plusieurs rouleaux d'appui, est lui aussi mobile par rapport au bâti 2, avec le rouleau de travail mobile par rapport au bâti.

Dans les exemples des Figures 1 à 10, le groupe d'appui 13, 23 associé à un rouleau de travail mobile par rapport au bâti, comprenant un unique rouleau d'appui ou plusieurs rouleaux d'appui, est monté, avec le rouleau de travail 10, 20 mobile, sur un support mobile 14, 24 par rapport au bâti. Par exemple, le support mobile 14, 24 est relié au bâti 2 par une glissière 16, 26, permettant par exemple une translation du support 14, 24, selon une direction de translation perpendiculaire au plan de défilement PXY.

Dans les modes de réalisation des Figures 2 et 4, le premier rouleau de travail 10 et les deux rouleaux d'appui 11, 12 associés au premier rouleau de travail 10 occupent une position fixe par rapport au bâti 2 de la machine, avec de préférence la possibilité d'un réglage statique de leur position relative, tandis que le second rouleau de travail 20 est monté à rotation autour du second axe Y20 sur un second support 24 qui est mobile par rapport au bâti 2, perpendiculairement au plan de défilement. Bien entendu, on pourrait prévoir un montage inverse, avec le second rouleau de travail 20 et les deux rouleaux d'appui 21, 22 associés au second rouleau de travail 20 occupant une position fixe par rapport au bâti 2 de la machine, avec de préférence la possibilité d'un réglage statique de leur position relative, tandis que le premier rouleau de travail 10 serait monté à rotation autour du premier axe Y10 sur un premier support 14 qui serait mobile par rapport au bâti 2, perpendiculairement au plan de défilement PXY.

Dans certains modes de réalisation, tel que celui illustré à la Figure 3, les deux rouleaux de travail 10, 20 sont mobiles par rapport au bâti 2 de la machine 1, et sont mobiles l'un par rapport à l'autre. Chaque groupe d'appui 13, 23, comprenant un ou deux rouleaux d'appui 11, 12, 21, 22, est mobile par rapport au bâti 2, avec le rouleau de travail 10, 20 associé. Dans de telles configurations, chaque groupe d'appui 13, 23 associé à un rouleau de travail, est de préférence monté, avec le rouleau de travail associé, sur un support mobile dédié 14, 24 qui est mobile par rapport au bâti.

Dans les exemples des Figures 12 à 14, le premier rouleau de travail 10 est monté rotatif autour du premier axe Y10 sur un premier support de travail 14, tandis que les deux rouleaux d'appui 11, 12 associés au premier rouleau de travail 10 sont montés rotatifs chacun autour de son propre axe sur un premier support d'appui 19. L'un au moins du premier support de travail 14 et du premier support d'appui 24 est porté par un premier mécanisme de guidage 17, 37, par lequel le premier support de travail 14 est mobile par rapport au premier support d'appui 19 entre une position relative rapprochée, illustrée à la Figure 13 pour le premier exemple et à la Figure 14 pour le deuxième exemple, dans laquelle le premier rouleau de travail 10 et les deux rouleaux d'appui 11, 12 associés au premier rouleau de travail 10 sont dans une position relative de contact, et une position relative écartée, illustrée seulement pour le premier exemple à la Figure 12, dans laquelle le premier rouleau de travail 10 et les deux rouleaux d'appui 11, 12 associés au premier rouleau de travail 10 sont dans leur position relative écartée.

On note que le premier support de travail 14 est mobile par rapport au premier support d'appui 19 et par rapport au bâti 2 de la machine.

Dans l'exemple des Figures 12 et 13, le premier mécanisme de guidage 17 est porté par le premier support d'appui 19 et le premier support de travail 14 est monté sur le premier support d'appui 19 par l'intermédiaire du premier mécanisme de guidage 17. Le premier mécanisme de guidage 17 est porté par le premier support d'appui 19 et est distinct du bâti 2 de la machine. Ainsi, dans ce mode de réalisation, le premier support de travail 14 et le premier rouleau de travail 10 sont dépourvus de guidage direct sur le bâti 2 de la machine.

Par exemple, dans l'exemple des Figures 12 et 13, le premier mécanisme de guidage 17 comporte au moins une glissière 17 comprenant un rail de guidage et un chariot qui est guidé en translation sur le rail de guidage, et l'un parmi le rail de guidage et le chariot est fixé ou formé sur l'un parmi le premier support d'appui 19 et le premier support de travail 14, tandis que l'autre parmi le rail de guidage et le chariot est fixé ou formé sur l'autre parmi le premier support d'appui 19 et le premier support de travail 14.

Au contraire, dans le deuxième exemple de la Figure 14, le premier mécanisme de guidage 37 est porté par le bâti 2 de la machine et le premier support de travail 14 est monté sur le bâti 2 par l'intermédiaire du premier mécanisme de guidage 37, qui comporte par exemple un jeu de glissières. Ainsi, dans cet exemple de la Figure 14, le premier support de travail 14 est guidé sur le bâti 2 indépendamment du premier support d'appui 19. Dans certains modes de réalisation de l'exemple de la Figure 14, le premier mécanisme de guidage 37 peut comprendre au moins glissière comprenant un rail de guidage et un chariot qui est guidé en translation sur le rail de guidage, et l'un parmi le rail de guidage et le chariot est fixé ou formé sur le bâti 2 et le premier support de travail 14, tandis que l'autre parmi le rail de guidage et le chariot est fixé ou formé sur l'autre parmi bâti 2 et le premier support de travail 14.

Tant pour l'exemple des Figures 12 et 13 que pour celui de la Figure 14, le premier mécanisme de guidage 17, 37 peut comprendre au moins deux glissières telles que décrites ci-dessus, agencées chacune respectivement d'un côté et de l'autre du premier support de travail 14 selon la direction de l'axe du premier rouleau de travail. De préférence, comme illustré dans l'exemple des Figures 12 et 13, mais cela peut être transposé à l'exemple de la Figure 14, le premier mécanisme de guidage 17, 37 peut comprendre au moins deux glissières telles que décrites ci-dessus, agencées chacune respectivement d'un côté et de l'autre du premier support de travail 14 selon la direction X de défilement.

De préférence, tant pour l'exemple des Figures 12 et 13 que pour celui de la Figure 14, le premier mécanisme de guidage 17, 37 peut comprendre au moins quatre glissières telles que décrites ci-dessus, agencées chacune respectivement d'un côté et de l'autre du premier support de travail 14 selon la direction de l'axe du premier rouleau de travail, et d'un côté et de l'autre du premier support de travail 14 selon la direction X de défilement.

Dans tous les cas, le premier mécanisme de guidage 17, 37 assure un guidage précis et rigide qui empêche ou limite fortement toute possibilité de désaxage du premier rouleau de travail 10. De préférence, le premier mécanisme de guidage 17, 37 assure un guidage avec un minimum de friction selon la direction de guidage.

Dans les deux exemples des Figures 12 à 14, le premier support d'appui 19 est fixe par rapport au bâti 2. Cependant, dans d'autres variantes, le premier support d'appui 19 est mobile par rapport au bâti 2 et le premier mécanisme de guidage 17 est alors mobile avec le premier support d'appui 19 par rapport au bâti 2, notamment selon la direction de calandrage Z par exemple sous l'effet d'un actionneur.

Dans les deux exemples, le premier mécanisme de guidage 17, 37 autorise un unique degré de liberté du premier support de travail 14 par rapport au premier support d'appui 19. En l'occurrence, et à titre d'exemple non limitatif, le premier mécanisme de guidage 17, 37 autorise uniquement une translation du premier support de travail 14 par rapport au premier support d'appui 19 selon une direction radiale perpendiculaire au premier axe Y10 et parallèle au plan de calandrage PYZ contenant les deux axes Y10, Y20 des deux rouleaux de travail 10, 20.

Dans les exemples des Figures 12 à 15, le second rouleau de travail 20 est monté rotatif autour du second axe Y20 sur un second support de travail 24, tandis que les deux rouleaux d'appui 21, 22 associés au premier rouleau de travail 20 sont montés rotatifs chacun autour de son propre axe sur un second support d'appui 29. L'un au moins du second support de travail 24 et du second support d'appui 29 est porté par un second mécanisme de guidage 27, 47, par lequel le second support de travail 24 est mobile par rapport au second support d'appui 29 entre une position relative rapprochée, illustrée à la Figure 13 pour le premier exemple et à la Figure 14 pour le deuxième exemple, dans laquelle le second rouleau de travail 20 et les deux rouleaux d'appui 21, 22 associés au second rouleau de travail 20 sont dans une position relative de contact, et une position relative écartée, illustrée seulement pour le premier exemple à la Figure 12, dans laquelle le second rouleau de travail 20 et les deux rouleaux d'appui 11, 12 associés au premier rouleau de travail 10 sont dans leur position relative écartée.

Par exemple, comme illustré sur les figures, le second mécanisme de guidage 27, 47 est identique au premier mécanisme de guidage 17, 37 en symétrie par rapport au plan de défilement PXY, et inversement.

On note que le second support de travail 24 est mobile par rapport au second support d'appui 29 et par rapport au bâti 2 de la machine.

Dans l'exemple des Figures 12 et 13, le second mécanisme de guidage 27 est porté par le second support d'appui 29 et le second support de travail 24 est monté sur le second support d'appui 29 par l'intermédiaire du second mécanisme de guidage 27 qui est porté par le second support d'appui 29 et qui est distinct du bâti 2 de la machine. Ainsi, dans ce mode de réalisation, le second support de travail 24 et le second rouleau de travail 20 sont dépourvus de guidage direct sur le bâti 2 de la machine.

Par exemple le second mécanisme de guidage 27 comporte au moins une glissière comprenant un rail de guidage et un chariot qui est guidé en translation sur le rail de guidage, et l'un parmi le rail de guidage et le chariot est fixé ou formé sur l'un parmi le second support d'appui 29 et le second support de travail 24, tandis que l'autre parmi le rail de guidage et le chariot est fixé ou formé sur l'autre parmi le second support d'appui 29 et le second support de travail 24.

Dans l'exemple des Figures 12 et 13, le second support d'appui 29 est mobile par rapport au bâti 2 et le second mécanisme de guidage 27 est alors mobile avec le second support d'appui 29 par rapport au bâti 2. Cependant, dans certains modes de réalisation dans lesquels le premier support d'appui 19 est mobile par rapport au bâti 2, le second support d'appui 29 peut être fixe par rapport au bâti 2.

Dans les deux exemples, le second mécanisme de guidage 27, 47 autorise un unique degré de liberté du second support de travail 24 par rapport au second support d'appui 29. En l'occurrence, et à titre d'exemple non limitatif, le second mécanisme de guidage 27, 47 autorise uniquement une translation du second support de travail 24 par rapport au second support d'appui 29 selon une direction radiale perpendiculaire au second axe Y20 et parallèle au plan de calandrage PYZ contenant les deux axes Y10, Y20 des deux rouleaux de travail 10, 20.

Pour chaque cas d'un rouleau de travail 10, 20 mobile par rapport au bâti 2 de la machine 1, par exemple monté sur un support mobile dédié 14, 24 qui est mobile par rapport au bâti, on prévoit de préférence un actionneur 15, 25 pour commander la position relative rouleau de travail 10, 20 mobile, le cas échéant de son support mobile dédié 14, 24, par rapport au bâti 1 et par rapport à l'autre des rouleaux de travail. L'actionneur 15, 25 est par exemple un actionneur hydraulique, notamment un vérin, ou un actionneur électrique, tel qu'un actionneur électrique linéaire. Un mécanisme de transmission peut être prévu entre l'actionneur 15, 25 et le rouleau de travail 10, 20 mobile, le cas échéant son support mobile dédié 14, 24, par exemple un mécanisme de démultiplicateur et/ou à renvoi d'angle. De préférence l'actionneur 15, 25 permet d'effectuer un réglage dynamique de la position relative des deux rouleaux mobiles, y compris pendant une phase de production, ceci afin d'adapter en temps réel l'écartement entre les deux rouleaux de travail au niveau de l'espace de calandrage 30, notamment pour s'adapter aux variations de conditions de calandrage au fur et à mesure du défilement du feuillard 4 au travers de l'espace de calandrage 30.

Dans les modes de réalisation des Figures 12 à 14, le second rouleau de travail 20 est mobile par rapport au second groupe d'appui 23 entre une position relative rapprochée, qui est illustrée à la Figure 13 pour un premier exemple et à la Figure 14 pour le deuxième exemple, dans laquelle le second rouleau de travail 20 et les second rouleaux d'appui 21, 22 associés au second rouleau de travail 20 sont dans une position relative de contact, ce qui correspond par exemple à une position relative de travail de la machine, et une position relative écartée, qui est illustrée seulement pour le premier exemple à la Figure 12, dans laquelle le second rouleau de travail 20 et les deux rouleaux d'appui 21, 22 associés au second rouleau de travail 20 sont dans une position relative écartée, ce qui correspond par exemple à une position relative de repos et/ou de maintenance de la machine.

Dans ces modes de réalisation, le second rouleau de travail 20 fait partie d'un ensemble mobile, par exemple en étant monté rotatif autour du second axe Y20 sur un second support de travail 24 qui est mobile par rapport au bâti 2, perpendiculairement au plan de défilement PXY.

Dans ces exemples, le second support de travail 24 et le second support d'appui 29 sont tous les deux mobiles par rapport au bâti 2 de la machine et mobiles par rapport au premier rouleau de travail 10, perpendiculairement au plan de défilement PXY, de telle sorte que l'ensemble mobile comprend le second support de travail 24, le second rouleau de travail 20, le second support d'appui 29 et les seconds rouleaux d'appui 21, 22.

Dans ces exemples, le second support de travail 24 est mobile, perpendiculairement au plan de défilement PXY, par rapport au second support d'appui 29 entre une position relative rapprochée, dans laquelle les second rouleaux d'appui 21, 22 et le second rouleau de travail 20 sont dans leur position relative de contact, et une position relative écartée, dans laquelle les second rouleaux d'appui 21, 22 sont écartés radialement de la surface de travail du second rouleau de travail 20.

Dans ces exemples, la liaison entre le second support d'appui 29 et le bâti 2 permet un déplacement du second support d'appui 29, et donc des second rouleaux d'appui 21, 22, purement selon la direction de translation Z perpendiculaire au plan de défilement PXY. Cependant, d'autres types de liaison mécanique entre le second support d'appui 29 et le bâti 2 peuvent être prévus, qui assurent non pas un déplacement purement selon la direction de translation perpendiculaire au plan de défilement PXY, mais un déplacement ayant une composante selon la direction de translation perpendiculaire au plan de défilement PXY, de préférence une composante majoritaire. Une telle liaison mécanique peut par exemple être une liaison mécanique à parallélogramme, à excentrique, etc...

Dans les modes de réalisation des Figures 1 à 4, les zones d'appui C11, C12, respectivement C21, C22, des deux rouleaux d'appui 11, 12, respectivement 21, 22, associés au premier rouleau de travail 10, respectivement associés aux second rouleau de travail 20, sont de préférence disposées symétriquement l'une par rapport à l'autre de part et d'autre du plan de travail PYZ comprenant le premier axe Y10 et le second axe Y20.

En première approximation, les efforts de calandrage qui sont appliqués par les rouleaux de travail 10, 20 sur le feuillard 4 présentent une composante majeure perpendiculairement au plan de défilement PXY, donc dans le plan de travail PYZ. Par conséquent, les efforts de réaction appliqués par le feuillard 4 sur chacun des rouleaux de travail présentent une composante majeure perpendiculairement au plan de défilement PXY, donc dans le plan de travail PYZ. En prévoyant une disposition symétrique des zones d'appuis de part et d'autre du plan de travail, on s'assure que ces efforts de réaction, et donc les déformations des rouleaux de travail qui en découlent, sont repris de manière stable par les deux rouleaux d'appui.

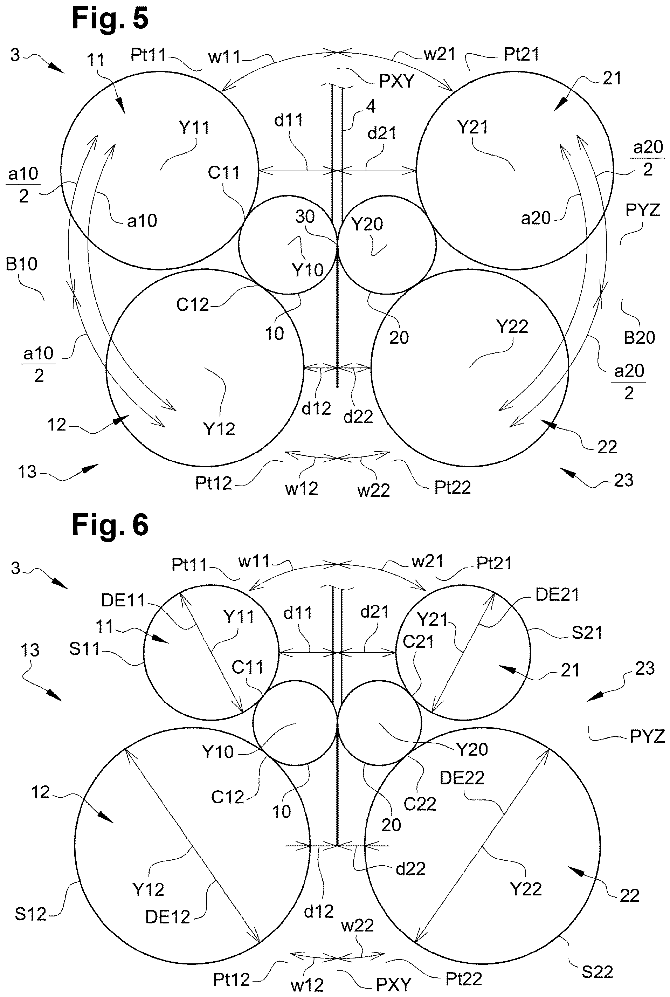

Dans les exemples des Figures 5 à 10, différentes configurations d'un groupe d'appui 13, 23 sont prévues, avec pour chacune d'elles une configuration dissymétrique du groupe d'appui 13, 23 par rapport au plan de travail PYZ.

Selon un premier aspect commun à ces modes de réalisation, on considère plus particulièrement le fait que chaque rouleau d'appui 11, 12, 21, 22 associé à un rouleau de travail donné, par exemple au premier rouleau de travail 10 ou au second rouleau de travail 20, présente une surface externe d'appui S11, S12, S21, S22 qui vient en appui sur le rouleau de travail associé. La surface externe d'appui S11, S12, S21, S22 de chaque rouleau d'appui 11, 12, 21, 22 est, au moins en première approximation, cylindrique de révolution à génératrice rectiligne. La surface externe d'appui S11, S12, S21, S22 de chaque rouleau d'appui 11, 12, 21, 22 présente donc un diamètre externe qui est le diamètre externe du rouleau d'appui considéré.

Dans tous les exemples des Figures 5 à 10, pour au moins un des deux groupes d'appui 13, 13 du groupe de calandrage 3, le groupe d'appui 13, 23 est configuré pour que la distance la plus courte d11, d21 entre la surface externe d'appui S11, S21 du rouleau d'appui amont 11, 21 et le plan de défilement PYZ est supérieure à la distance la plus courte d12, d22 entre la surface externe d'appui S12, S22 du rouleau d'appui aval 12, 22 et le plan de défilement PYZ.

Dans les exemples comprenant des groupes d'appuis 13, 23, associés respectivement au premier rouleau de travail 10 et au second rouleau de travail 20, qui sont symétriques par rapport au plan de défilement PXY, il en résulte nécessairement que la distance la plus courte d01=d11+d21 entre les deux rouleaux d'appui amont 11, 21 qui sont associés respectivement au premier rouleau de travail 10 et au second rouleau de travail 20, est supérieure à la distance la plus courte d02=d12+d22 entre les deux rouleaux d'appui aval 12, 22 qui sont associés respectivement au premier rouleau de travail 10 et au second rouleau de travail 20.

Une telle disposition présente notamment comme avantage de libérer de l'espace entre les deux rouleaux d'appui amont 11, 21 qui sont associés respectivement au premier rouleau de travail 10 et au second rouleau de travail 20.

Comme illustré aux Figure 9 et 10, cet espace peut avantageusement être mis à profit pour pouvoir disposer, au plus près possible des rouleaux de travail 10, 20, des équipements auxiliaires 32. Dans les exemples des Figures 9 et 10, on constate que l'espace accru entre les deux rouleaux d'appui amont 11, 21 peut recevoir une filière 32 d'extrusion d'un film ou une filière 32 de dépôt d'une poudre de formation d'un film, ledit film étant destiné par exemple à être calandré dans la machine de calandrage. Dans de telles applications, ce film forme le feuillard au sens de la présente demande.

Un tel film peut par exemple être une couche de matériau d'électrode qui est soit supportée sur une couche support, par exemple supportée sur un film de transfert ou supportée directement sur une feuille métallique destinée à former un collecteur de courant pour une cellule électrochimique, soit auto-supportée. Dans certaines applications, un tel film de matériau d'électrode peut donc être, dans la machine de calandrage, calandré seul, éventuellement avec apport de chaleur, pour donner de la cohésion à la couche de matériau d'électrode, et/ou pour lui conférer des propriétés de structuration souhaitées, et/ou pour lui conférer des propriétés de tribologie et/ou de rhéologie souhaitées, et/ou pour lui conférer des propriétés dimensionnelles souhaitées. Par exemple, la machine peut être utilisée pour fabriquer un film à partir d'une poudre, ledit film étant par exemple calandré dans la machine de calandrage dans une opération de formation du film par laquelle la poudre, introduite juste en amont de l'espace de calandrage 30, est calandrée dans l'espace de calandrage 30 pour obtenir, en aval de l'espace de calandrage 30, un film formé de ladite poudre, ce film ayant de préférence suffisamment de cohésion pour former une couche auto-supportée pouvant être manipulée en aval, et ce film étant donc le feuillard au sens de la présente demande. Dans d'autres applications, un tel film de matériau d'électrode peut donc être, dans la machine de calandrage, calandré sur un couche support, par exemple sur une feuille métallique destinée à former un collecteur de courant pour une cellule électrochimique, pour assembler les couches l'une à l'autre, et/ou pour donner de la cohésion à la couche de matériau d'électrode, et/ou pour conférer au feuillard multicouches ainsi constitué des propriétés de structuration, de tribologie et/ou rhéologie, et/ou dimensionnelles souhaitées.

Le matériau d'électrode peut par exemple comprendre un matériau actif d'électrode associé à un liant, par exemple un liant fibrillable. La matériau actif d'électrode peut par exemple être ou comprendre un oxyde métallique de lithium (par exemple de type NMC, NCA ou LFP) et/ou du graphite et/ou du carbone activé dans le cas d'une cathode, ou du graphite ou du silicium dans le cas d'une anode. Le liant fibrillable peut par exemple être ou comprendre du polytétrafluoroéthylène (PTFE), du polyvinylpyrrolidone (PVP), du polyfluorure de vinylidène (PVDF), de l'oxyde de polyéthylène (PEO), du polyéthylène (PE) et/ou de l'arboxyméthylcellulose (CMC), ou une combinaison de ces éléments. Les liants fibrillables peuvent être caractérisés par leur consistance molle, souple et pliable et, en particulier, par leur capacité à s'étirer, à s'allonger et à devenir et plus fins pour prendre un aspect fibreux lorsqu'ils sont soumis à des efforts de cisaillement.

Plusieurs dispositions sont possibles pour aboutir à une telle configuration du groupe d'appui.

Dans les exemples des Figures 5, 7 et 9, les deux rouleaux d'appui d'un même groupe d'appui 13, 23, donc associés à un même rouleau de travail 10, 20, sont décalés vers l'aval. Bien entendu, les rouleaux d'appui sont en contact avec le rouleau de travail comme exposé ci-dessus. Dans ces exemples, la bissectrice B10, B20 de l'angle d'écart d'appui a10, a20 présente une direction qui est inclinée vers l'aval en s'écartant du plan de défilement PYZ. En d'autres termes, la bissectrice B10, B20 de l'angle d'écart d'appui a10, a20 est présente une composante, selon la direction de défilement, qui est dirigée vers l'aval en s'écartant du plan de défilement PYZ à l'opposé de l'espace de calandrage 30 depuis le centre du rouleau de travail considéré. Autrement dit, pour un groupe d'appui 13, 23 donné associé à un rouleau de travail 10, 20 donné, la zone d'appui amont C11, C21, est plus proche du plan de travail PYZ que la zone d'appui aval C12, C22. La bissectrice B10, B20 de l'angle d'écart d'appui a10, a20 présente une direction qui est inclinée vers l'aval en s'écartant du plan de défilement PYZ d'un angle qui peut être compris par exemple dans la gamme allant de 3 à 35 degrés d'angle, de préférence dans la gamme allant de 5 à 20 degrés d'angle.

Dans les exemples des Figures 5, 7 et 9, les deux rouleaux d'appui associés à un même rouleau de travail sont de même diamètre. Cependant, dans des variantes, on peut configurer un groupe d'appui avec deux rouleaux d'appui associés à un même rouleau de travail qui, tout en étant décalés vers l'aval comme dans les exemples des Figures 5, 7 et 9, ont un diamètre différent, notamment avec le rouleau d'appui amont présentant un diamètre externe inférieur au diamètre externe du rouleau d'appui aval, comme décrit ci-après.

Dans les exemples des Figures 6, 8 et 10, le groupe de calandrage 3 comporte au moins un premier groupe d'appui 13 dans lequel le rouleau d'appui amont 11 associé au premier rouleau de travail 10 présente un diamètre externe DE11 qui est inférieur au diamètre externe DE12 du rouleau d'appui aval 12 associé au premier rouleau de travail 10. Dans ces exemples, le premier groupe d'appui 13 et le second groupe d'appui 23 sont symétriques l'un de l'autre de part et d'autre du plan de défilement PXY, de sorte que, pour les deux groupes d'appui 13, 23, le rouleau d'appui amont 11, 21 présente un diamètre externe DE11, DE21 qui est inférieur au diamètre externe DE12, DE 22 du rouleau d'appui aval 12, 22. La différence de diamètre externe entre le rouleau d'appui amont 11, 21 et le rouleau d'appui aval 12, 22 peut par exemple être comprise dans la gamme de 5% à 40% du diamètre externe du rouleau d'appui aval 12, 22, plus préférentiellement de 10% à 25% du diamètre externe du rouleau d'appui aval 12, 22.

Dans les exemples des Figures 6, 8 et 10, pour un groupe d'appui donné associé à un rouleau de travail, la zone d'appui amont C11, C21, est agencée à la même distance du plan de travail que la zone d'appui aval C12, C22.

Dans les exemples de Figures 5 à 10, on remarque que la configuration des groupes d'appui 13, 23 permet de faciliter l'accès, dans le sens de la direction de défilement X, à l'espace de calandrage 30 par son côté amont. Pour chaque groupe d'appui 13, 23, on peut en effet définir un plan tangent amont Pt11, Pt21, tangent du côté amont à la fois au rouleau de travail 10, 20 et au rouleau d'appui amont 11, 21 associé à ce rouleau de travail 10, 20. Ce plan tangent amont Pt11, Pt21 forme un angle de dégagement amont w11, w21, avec le plan de défilement PXY. On peut aussi définir, pour chaque groupe d'appui 13, 23, un plan tangent aval Pt12, Pt22, tangent du côté aval à la fois au rouleau de travail 10, 20 et au rouleau d'appui aval 12, 22 associé à ce rouleau de travail 10, 20. Ce plan tangent aval Pt12, Pt22 forme un angle de dégagement aval w12, w22 avec le plan de défilement PXY. Dans les exemples des Figures 5 à 10, pour un groupe d'appui donné 13, 23, l'angle de dégagement amont w11, w21 est supérieur à l'angle de dégagement aval w12, w22. De ce fait, l'accès à l'espace de calandrage 30 par son côté amont est facilité, sur au moins un côté du plan de défilement.

Dans ces exemples, le premier groupe d'appui 13 et le second groupe d'appui 23 sont symétriques l'un de l'autre de part et d'autre du plan de défilement PXY, de sorte que, pour les deux groupes d'appui 13, 23, l'angle de dégagement amont w11, w21 est supérieur à l'angle de dégagement aval w12, w22. Au total, il en résulte que l'angle total de dégagement amont w11+w21, entre les deux plans tangents amont Pt11, Pt21 peut être accru, et peut notamment être supérieur à un angle total de dégagement aval w12+w22, entre les deux plans tangents aval Pt12, Pt22.

De manière général, le groupe d'appui associé à un rouleau de travail donné permet de renforcer la raideur du groupe de calandrage 3 à la flexion. On note que dans les exemples illustrés aux Figures 5 à 10, les groupes d'appui ne sont pas symétriques par rapport au plan de travail PYZ. On comprend que de manière générale, la raideur du groupe de calandrage 3 à la flexion, induite par ces configurations, est supérieure en flexion vers l'aval que vers l'amont. Cela résulte du décalage vers l'aval des rouleaux d'appui et/ou de la mise en œuvre de rouleau d'appui aval de plus large diamètre. Or, dans la plupart de configurations de calandrage, les efforts de réaction appliqués par le feuillard 4 sur chacun des rouleaux de travail présentent une composante majeure perpendiculairement au plan de défilement PXY, donc dans le plan de travail PYZ, mais présentent aussi une composante parallèle au plan de défilement PXY, orientée dans le sens aval. Cela est lié au fait que, dans l'opération de calandrage, l'épaisseur du feuillard 4 en amont de l'espace de calandrage 30 est supérieure à son épaisseur en aval de l'espace de calandrage 30. En prévoyant que la raideur du groupe de calandrage à la flexion, induite par les configurations évoquées ci-dessus, est supérieure en flexion vers l'aval que vers l'amont, on adapte la raideur du groupe de calandrage 3 dans le sens pour qu'elle s'oppose aux efforts de réaction appliqués par le feuillard 4 sur chacun des rouleaux de travail, en réduisant donc la flexion de ces rouleaux de travail tout en favorisant l'accessibilité à l'espace de calandrage 30 par son côté amont.

Il est par ailleurs ici proposé des procédés de calandrage d'un feuillard 4 à calandrer, du type dans lequel on provoque le défilement du feuillard 4, dans un plan de défilement PXY selon une direction de défilement X d'amont en aval, au travers d'un espace de calandrage 30 défini entre un premier rouleau de travail 10 rotatif autour d'un premier axe Y10 et un second rouleau de travail 20 rotatif autour d'un second axe Y20 parallèle au premier axe Y10, les deux rouleaux de travail (10, 20) étant contrarotatifs.

Ces procédés comportent l'application, sur le premier rouleau de travail 10, d'au moins deux rouleaux d'appui 11, 12, respectivement amont 11 et aval 12, qui sont parallèles entre eux, qui sont parallèles au premier rouleau de travail 10 et qui sont chacun en appui contre le premier rouleau de travail 10, chacun en une zone d'appui C11, C12, respectivement amont C11 et aval C12, agencées toutes les deux sur un côté du premier rouleau de travail 10 qui est opposé à l'espace de calandrage par rapport au premier axe Y10.

Ces procédés sont par exemple mis en œuvre avec une machine de calandrage telle que décrite ci-dessus.

Un exemple d'un tel procédé 100 peut, comme illustré dans le diagramme de la Figure 11, comprendre la fourniture 110 d'un feuillard 4 à calandrer en amont d'un espace de calandrage 30 d'une machine de calandrage 1. Le procédé 100 comprend l'étape 120 de provoquer le défilement du feuillard 4, dans un plan de défilement PXY, selon une direction de défilement X d'amont en aval, au travers de l'espace de calandrage 30 défini entre un premier rouleau de travail 10 rotatif autour d'un premier axe Y10 et un second rouleau de travail 20 rotatif autour d'un second axe Y20 parallèle au premier axe Y10. Le procédé 100 comprend l'étape 130 d'application, sur le premier rouleau de travail 10, d'au moins deux rouleaux d'appui 11, 12, respectivement amont 11 et aval 12, qui sont parallèles entre eux, qui sont parallèles au premier rouleau de travail 10 et qui sont chacun en appui contre le premier rouleau de travail 10, chacun en une zone d'appui C11, C12, respectivement amont C11 et aval C12, agencées toutes les deux sur un côté du premier rouleau de travail 10 qui est opposé à l'espace de calandrage 30 par rapport au premier axe Y10.

Le procédé peut par ailleurs comprendre, de manière optionnelle, différentes étapes et caractéristiques qui découlent des caractéristiques possibles de la machine de calandrage 1 telle que décrite ci-dessus.

Selon un autre aspect de l'invention, l'invention concerne un procédé 200, 300 de contrôle de la rotation des rouleaux d'une machine de calandrage 1, dont différentes variantes sont décrites en relation avec les Figures 15 à 20. Ce procédé pourra notamment être appliqué pour le contrôle de deux rouleaux, ou de plus de deux rouleaux, dont on souhaite que leurs vitesses de rotation respectives soient, au moins pour certaines phases opératoires, dans un rapport fixe prédéterminé. Ce procédé pourra notamment être appliqué pour le contrôle de deux rouleaux, ou de plus de deux rouleaux, qui sont mécaniquement liés en rotation, soit par contact direct, par exemple dans le cas d'un rouleau de travail et d'un rouleau d'appui associé, soit par contact indirect, dans le cas de deux rouleaux de travail qui sont chacun au contact d'une face d'un feuillard défilant entre les deux rouleaux de travail. Dans le cadre de la présente divulgation, deux rouleaux doivent être considérés comme mécaniquement liés en rotation si les deux rouleaux effectuent de manière symbiotique une tâche telle que le soutien d'un rouleau d'une paire soumis à des forces externes par l'autre rouleau, qui est alors un rouleau d'appui tel que décrit ci-dessus, et/ou la réalisation d'une étape de travail par une paire de rouleaux de travail, tel que décrit ci-dessus (l'étape de travail étant par exemple, la conversion d'une poudre en film, la densification d'une bande, d'un cordon, d'une bande ou film, d'un et/ou la stratification d'au moins deux couches, par exemple deux bandes, cordes, bandes et/ou films, ou similaire).

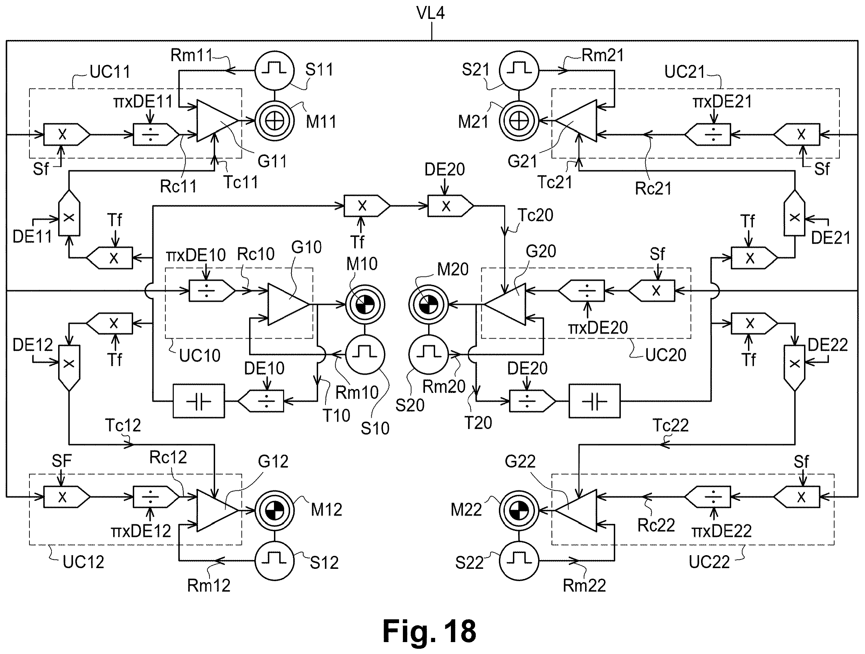

Le procédé 200 est défini dans un premier temps pour s'appliquer à un rouleau de travail et au moins un rouleau d'appui associé à ce rouleau de travail, par exemple dans une machine de calandrage 1 du type déjà décrit précédemment. En se reportant aux figures 1 à 10, ou 12 à 14, pour la machine de calandrage 1, la machine de calandrage 1, à laquelle est appliqué le procédé 200, 300, comporte un rouleau de travail 10 rotatif autour d'un premier axe Y10, et au moins un rouleau d'appui 11, 12, qui est parallèle au rouleau de travail 10 et qui est en appui contre le premier rouleau de travail 10, en une zone d'appui C11, C12, agencée sur un côté du rouleau de travail 10. Dans la variante illustrée à la Figure 15, l'au moins un rouleau d'appui 12 est le seul rouleau d'appui associé au rouleau de travail 10. Cependant, dans d'autres variantes, comme illustré par exemple à la Figure 18 qui sera commentée par ailleurs, l'au moins un rouleau d'appui 12 peut être l'un de plusieurs rouleaux d'appui 11, 12 associés chacun au dit rouleau de travail 10, chacun étant parallèle et en appui contre le dit rouleau de travail 10.

Comme cela est représenté schématiquement sur la figure 15, la machine de calandrage 1 comprend en outre un premier moteur de travail M10 d'entraînement du premier rouleau de travail 10, et un premier moteur d'appui M12 d'entraînement de l'au moins un rouleau d'appui 12. La machine de calandrage 1 comprend en outre une première unité de contrôle de travail UC10, pour le contrôle en vitesse du premier moteur de travail M10 et une première unité de contrôle d'appui UC12, pour le contrôle en vitesse et en couple du premier moteur d'appui M12.

Dans le présent texte, chaque unité électronique de contrôle commandant un moteur électrique d'entraînement d'un rouleau de travail ou d'appui peut être ou peut comprendre un régulateur électronique de type proportionnel, de type proportionnel-intégral, de type de type proportionnel-intégral-dérivé, ou autre type habituel. L'unité électronique de contrôle peut comprendre des circuits électroniques de calcul, de comparaison, une ou plusieurs entrées analogiques ou digitales, une ou plusieurs sorties analogiques ou digitales, une ou plusieurs mémoires électroniques, etc...

La première unité de contrôle de travail UC10 est par exemple fonctionnellement associée à un premier capteur de vitesse de travail S10 configuré pour mesurer une vitesse de rotation Rm10 de l'au moins un rouleau de travail de travail 10. La première unité de contrôle de travail UC10 est fonctionnellement associée à un premier estimateur de couple de travail configuré pour déterminer un couple exercé T10 sur l'au moins un rouleau de travail 10, sur l'axe de celui-ci. Le premier estimateur de couple peut être un élément distinct de la première unité de contrôle de travail UC10, avec une liaison de communication directe ou indirecte entre le premier estimateur de couple et la première unité de contrôle de travail UC10, ou le premier estimateur de couple peut être intégré à la première unité de contrôle de travail UC10. Le premier estimateur de couple de travail peut être réalisé sous la forme d'un capteur de couple, ou comme dans l'exemple, par exploitation d'une information représentative du couple fourni par le premier moteur de travail M10 sur l'axe du rouleau 10 considéré. Dans l'exemple, le moteur de travail 10 est piloté, par la première unité de contrôle UC10, par un courant électrique de pilotage I10 dont l'intensité électrique est représentative du couple T10 exercé par le premier moteur de travail M10 sur l'au moins un rouleau de travail 10. L'estimateur de couple pourra prendre en compte un rapport de réduction/multiplication d'une éventuelle transmission entre le moteur de travail M10 et le rouleau de travail pour déterminer le couple T10 appliqué sur l'axe du rouleau de travail 10. Le premier estimateur de couple utilise donc par exemple une intensité électrique I10 représentative du couple exercé par le premier moteur de travail M10 sur l'au moins un rouleau de travail 10 éventuellement multipliée par un rapport de réduction/multiplication d'une éventuelle transmission entre le moteur et le rouleau.

La première unité de contrôle d'appui UC12 est par exemple fonctionnellement associée à un capteur de vitesse S12 configuré pour mesurer une vitesse de rotation Rm 12 de l'au moins un rouleau d'appui 12.

La première unité de contrôle UC10 et la première unité de contrôle d'appui UC12 sont configurées pour communiquer entre elles, directement ou indirectement, par exemple par une liaison de communication analogique ou numérique.

Dans l'exemple de la Figure 15, le système de contrôle comprenant la première unité de contrôle de travail UC10 et la première unité de contrôle d'appui UC12 reçoit une consigne de vitesse pour le premier rouleau de travail 10. Dans l'exemple, cette consigne de vitesse est une consigne de vitesse linéaire VL4, par exemple exprimée en m/min, qui représente une consigne de vitesse tangentielle pour le premier rouleau de travail 10 au niveau de sa surface externe de travail. Comme les deux rouleaux 10, 12 sont en appui l'un contre l'autre et que l'on veut éviter tout glissement au niveau de ce contact, on comprend que l'on cherche à obtenir, pour ces deux rouleaux 10, 12 la même vitesse tangentielle en leurs surfaces externes respectives qui sont en contact l'une avec l'autre.

Dans cet exemple de le Figure 15, le système est conçu pour asservir le couple suiveur T12 exercé par le moteur suiveur M12 sur l'au moins un rouleau suiveur 20, ici le premier rouleau d'appui 12, au couple principal T10 exercé par le moteur principal M10 sur l'au moins un rouleau principal 10, ici le premier rouleau de travail 10. On peut donc arbitrairement considérer que la première unité de contrôle de travail UC10 est une unité de contrôle principale (ou maître), et que la première unité de contrôle d'appui UC12 est une unité de contrôle suiveuse.

Dans l'exemple on voit que, par exemple en amont ou au sein de la première unité de contrôle de travail UC10, la consigne de vitesse linéaire VL4 est divisée par un paramètre représentatif du diamètre du premier rouleau de travail 10, en l'occurrence par exemple tout simplement par Π(Pi) fois le diamètre DE10 du premier rouleau de travail 10, ce qui permet d'obtenir une consigne de vitesse de rotation Rc10 pour ce premier rouleau de travail 10, par exemple exprimée en tours/min, laquelle consigne de vitesse de rotation Rc10 est donnée comme valeur d'entrée par exemple à un régulateur G10 de la première unité de contrôle de travail UC10. De préférence, la première unité de contrôle de travail UC10 reçoit par ailleurs aussi l'information représentative de la vitesse de rotation mesurée Rm10 de l'au moins un premier rouleau de travail 10, qui peut avantageusement être utilisée pour un contrôle en boucle fermée de la vitesse de rotation du premier rouleau de travail 10 par la première unité de contrôle de travail UC10. Dans cet exemple, dans lequel le système est conçu pour asservir, en couple, la rotation du premier rouleau d'appui 12 à celle du premier rouleau de travail 10, la consigne de vitesse de rotation Rc10 pour ce premier rouleau de travail 10 est dénommée consigne principale (ou maître) de vitesse de rotation pour la régulation. Le régulateur G10, qui peut ici être qualifié de régulateur principal (ou maître) dans la régulation, s'assure que le premier moteur de travail M10 est piloté, par la première unité de contrôle UC10, par exemple par le courant électrique de pilotage I10, de manière à ce que l'écart entre la consigne de vitesse de rotation Rc10 pour ce premier rouleau de travail 10 et la vitesse de rotation Rm10 mesurée pour ce premier rouleau de travail 10 soit minimisée.

Dans l'exemple on voit que, par exemple en amont ou au sein de la première unité de contrôle d'appui UC12, la consigne de vitesse linéaire VL4 est divisée par un paramètre représentatif du diamètre du premier rouleau d'appui 12, en l'occurrence par exemple tout simplement par Π(Pi) fois le diamètre DE12 du premier rouleau de travail 12. Mais, par ailleurs, selon un aspect particulier, cette consigne de vitesse linéaire VL4 est aussi multipliée, avant ou après la division par Π(Pi) fois le diamètre DE12, par un coefficient de vitesse Sf qui est par exemple supérieur à 1. Le coefficient de vitesse Sf est par exemple inférieur à 1.5, par exemple compris entre 1.01 et 1.2, par exemple entre 1.03 et 1.1. Le coefficient de vitesse Sf est par exemple fixe, mais on pourrait aussi envisager que ce coefficient de vitesse Sf soit dépendant d'un ou plusieurs paramètres, par exemple dépendant de la consigne de vitesse linéaire VL4. Cette double opération permet d'obtenir une consigne de vitesse de rotation Rc12 pour ce premier rouleau d'appui 12, laquelle est par exemple donnée comme valeur d'entrée à un régulateur G12 de la première unité de contrôle d'appui UC12, qui, de préférence, reçoit par ailleurs aussi l'information représentative de la vitesse de rotation mesurée Rm12 de l'au moins un premier rouleau d'appui 12. Dans cet exemple, dans lequel le système est conçu pour asservir la rotation du premier rouleau d'appui 12 à la rotation du premier rouleau de travail 10, la consigne de vitesse de rotation Rc12 pour ce premier rouleau d'appui 12 est dénommée consigne suiveuse de vitesse de rotation pour la régulation, et le régulateur G12 de la première unité de contrôle d'appui UC12 est un régulateur suiveur dans la régulation. On peut remarquer que la consigne suiveuse de vitesse de rotation Rc12 est, dans cet exemple, indépendante de la vitesse de rotation mesurée Rm10 du rouleau principal 10. Le régulateur G12 de la première unité de contrôle d'appui UC12 est par exemple de même type voire identique au régulateur G10 de la première unité de contrôle de travail UC10.

Selon un autre aspect particulier, l'unité de contrôle suiveuse UC12, par exemple le régulateur suiveur G12, reçoit par ailleurs une information de limite de couple Tc12 qui vise à limiter la consigne de couple qui est fournie au premier moteur d'appui M12, donc qui vise à limiter le couple qui est fourni par le premier moteur d'appui M12 au premier rouleau d'appui 12, sur l'axe de celui-ci. Plus particulièrement la consigne de couple qui est fournie au premier moteur d'appui M12 est telle que, au niveau du contact entre le premier rouleau de travail 10 et le premier rouleau d'appui 12, la force d'entrainement due au premier moteur d'appui M12 est inférieure à la force d'entrainement due au premier moteur de travail M10. Grâce à cela, on s'assure que, des deux rouleaux 10, 12, le rouleau qui est principal dans la régulation, ici le premier rouleau de travail 10, n'est jamais entraîné en survitesse par le rouleau suiveur qui est ici le premier rouleau d'appui 12. Par conséquent, le premier moteur de travail M10, qui est le moteur principal dans la régulation, n'est pas amené à fournir, par la faute du couplage mécanique avec le premier rouleau d'appui, un couple négatif de freinage, ce qui favorise la précision et la stabilité de la régulation de vitesse du premier rouleau de travail 10. Selon un mode de réalisation, le couple principal, ici représenté par le couple T10 exercé par le premier moteur de travail M10 sur l'axe du premier rouleau de travail 10, est multiplié par un coefficient de couple Tf inférieur à 1, pour obtenir une consigne suiveuse de limite de couple Tc12 pour le rouleau suiveur, ici constitué par le premier rouleau d'appui 12. Le coefficient de couple Tf est par exemple supérieur à 0.5. Le coefficient de couple Tf est par exemple compris entre 0.8 et 0.99, par exemple compris entre 0.9 et 0.97.

Par exemple, dans l'exemple de la Figure 15, il est aussi appliqué un coefficient de rapport de diamètres pour tenir compte d'une éventuelle différence de diamètre entre le rouleau principal pour la régulation, ici par exemple le premier rouleau de travail 10, et le rouleau suiveur pour la régulation, ici le premier rouleau d'appui 12. Ainsi, le couple principal, ici le couple T10 exercé par le premier moteur de travail M10 sur le premier rouleau de travail 10, est divisé par le diamètre du rouleau principal, ici le diamètre DE10 du premier rouleau de travail 10 (ou respectivement la moitié du diamètre DE10), et multiplié par le diamètre du rouleau suiveur, ici le diamètre DE12 du premier rouleau d'appui 12 (respectivement la moitié du diamètre DE12).

Le calcul de la consigne suiveuse de limite de couple Tc12 pour le rouleau suiveur, ici constitué par le premier rouleau d'appui 12, pourra prendre en compte un rapport de réduction/multiplication d'une éventuelle transmission entre le premier moteur de travail M10 et le premier rouleau de travail 10, et/ou d'un rapport de réduction/multiplication d'une éventuelle transmission entre le premier moteur d'appui M12 et le premier rouleau d'appui 12, ceci afin que soit déterminée la limite de couple réellement appliqué sur l'axe du rouleau suiveur. Par exemple, le couple généré par le moteur sur son propre arbre sera multiplié/divisé par un rapport de réduction/multiplication d'une éventuelle transmission entre le moteur et le rouleau.

Ces opérations de multiplication et de division, pour obtenir la consigne suiveuse de limite de couple Tc12 pour le rouleau suiveur, ici constitué par le premier rouleau d'appui 12, peuvent être effectuées dans n'importe quel ordre. Un filtrage, par exemple de type moyennant ou passe-bas, peut être effectué pour lisser le bruit éventuel dans l'estimation du couple principal T10**.**

La première unité de contrôle d'appui UC12 s'assure, par exemple par le régulateur suiveur G12, que le premier moteur d'appui M12 est piloté, par exemple par le courant électrique de pilotage I12, de manière à ce que l'écart entre la consigne de vitesse de rotation Rc12 et la vitesse de rotation Rm12 mesurée pour ce premier rouleau d'appui 12 soit minimisée, tout en assurant la limitation de couple appliqué sur l'axe du premier rouleau d'appui en suivant la consigne suiveuse de limite de couple Tc12.

Avec un tel procédé, le premier rouleau d'appui 12, qui est le rouleau suiveur, est entraîné à une vitesse de rotation telle que la vitesse tangentielle de sa surface externe de contact est au plus proche de la vitesse tangentielle de la surface externe du rouleau principal auquel il est mécaniquement lié, sans la dépasser.

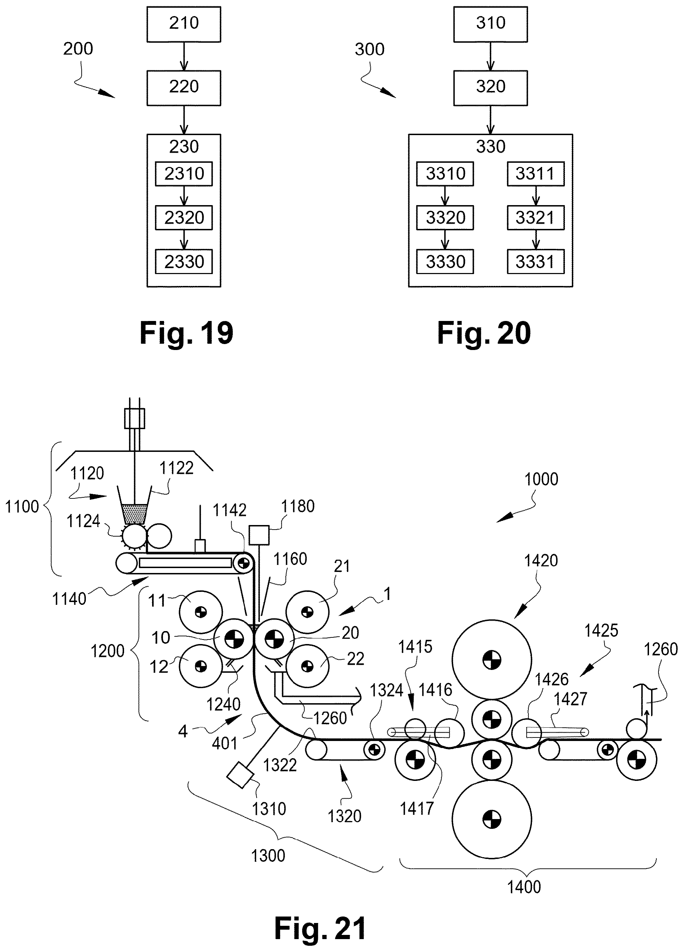

Dans le cadre de l'exemple de la Figure 15, le procédé 200 de contrôle de la rotation du rouleau principal, ici constitué par le premier rouleau de travail 10, et du rouleau suiveur, ici constitué par le premier rouleau d'appui 12, peut comprendre les étapes suivantes, illustrée schématiquement à la Figure 19.

Comme illustré à la Figure 19, le procédé 200 de contrôle peut comprendre l'étape de commander 210, par l'unité de contrôle principale UC10, l'application par le moteur principal M10 d'une consigne de vitesse de rotation Rc10 du rouleau principal 10. Le rouleau principal 10 est donc entraîné en rotation à la vitesse de rotation qui est égale ou très proche de la consigne de vitesse de rotation Rc10 pour le rouleau principal 10, de telle sorte que sa surface externe présente un vitesse tangentielle linéaire très proche ou égale à la consigne de vitesse linéaire VL4, qui est par exemple la vitesse souhaitée de défilement du feuillard 4 dans l'espace de calandrage 30 ou une vitesse très proche. Typiquement, on choisit la consigne de vitesse de rotation Rc10 du premier rouleau telle que la vitesse tangentielle de sa surface cylindrique externe est égale à la consigne de vitesse linéaire VL4.

Le procédé 200 peut comprendre l'étape de calculer 220 une consigne suiveuse de vitesse de rotation Rc12 pour le rouleau suiveur correspondant à la même consigne de vitesse tangentielle VL4, multipliée par un coefficient de vitesse Sf supérieur à 1, tel que décrit plus haut. La consigne de vitesse de rotation Rc12 du rouleau suiveur, ici le premier rouleau d'appui 12, est telle que la vitesse tangentielle de sa surface cylindrique externe serait, si cette consigne de vitesse était atteinte, supérieure à la consigne de vitesse linéaire VL4. Cependant, le procédé est conçu de telle sorte que cette consigne de vitesse de rotation Rc12 du rouleau suiveur, ici le premier rouleau d'appui 12, n'est pas atteinte.

En effet, le procédé 200 peut comprendre l'étape de répéter 230 les étapes suivantes, de préférence selon une fréquence de pilotage prédéterminée :
- déterminer 2310 le couple principal T10 exercé sur le rouleau principal 10 par le moteur principal M10, par exemple par l'estimateur de couple tel que décrit plus haut ;
- multiplier 2320 le couple principal T10 par un coefficient de couple Tf inférieur à 1, pour obtenir une consigne suiveuse de limite de couple Tc12 pour le rouleau suiveur 12 ;
- commander 2330, par l'unité de contrôle suiveuse UC12, l'application par le moteur suiveur M12 de la consigne suiveuse de vitesse de rotation Rc12 et de la consigne suiveuse de limite de couple Tc12 pour le rouleau suiveur 12.

De préférence, la fréquence de pilotage prédéterminée est supérieure à 1000 Hz, de préférence supérieure ou égale à 1Mhz. Ainsi le couple principal T10 exercé sur l'axe du rouleau principal 10 par le moteur principal M10 est déterminé au moins toutes les millisecondes ou au moins toutes les microsecondes, de sorte que l'on peut considérer qu'il s'agit d'un couple instantané, et la régulation de l'entraînement du rouleau suiveur par le moteur suiveur est elle aussi de préférence effectuée au moins toutes les millisecondes ou au moins toutes les microsecondes, de sorte que la vitesse du rouleau suiveur et le couple appliqué sur son axe peuvent être considérés comme ajustés en temps réel pour que rouleau principal 10 ne soit jamais entraîné par le rouleau suiveur 12 au-delà de sa consigne de vitesse de rotation Rc10. La fréquence de détermination du couple principal et la fréquence de commande du moteur suiveur ne sont pas nécessairement identiques. La fréquence de pilotage considérée sera par exemple la plus basse de ces deux fréquences.

En relation avec la Figure 16, mais toujours selon le déroulé de la Figure 19, le procédé 200 est défini dans une deuxième variante pour s'appliquer aux deux rouleau de travail 10, 20 d'une machine de calandrage, indépendamment de la présence ou pas de rouleaux d'appui. La machine de calandrage est donc du type comportant un premier rouleau de travail 10 rotatif autour d'un premier axe Y10, qui sera ci-après considéré comme étant le rouleau principal, et un second rouleau de travail 20 rotatif autour d'un second axe Y20 parallèle au premier axe Y10, qui sera ci-après considéré comme étant le rouleau suiveur, les deux rouleaux de travail 10, 20 étant contrarotatifs et définissant entre eux un espace de calandrage 30 dans lequel le feuillard 4 défile dans un plan de défilement PXY selon une direction de défilement X d'amont en aval.

Comme cela est représenté schématiquement sur la figure 16, la machine de calandrage 1 comprend en outre un premier moteur de travail M10 d'entraînement du premier rouleau de travail 10, et un second moteur de travail M20 d'entraînement du second rouleau de travail 20. La machine de calandrage 1 comprend en outre une première unité de contrôle de travail UC10, pour le contrôle en vitesse du premier moteur de travail M10 et une seconde unité de contrôle de travail UC20, pour le contrôle en vitesse et en couple du second moteur de travail M20.

La seconde unité de contrôle de travail UC20 est par exemple fonctionnellement associée à un capteur de vitesse S20 configuré pour mesurer une vitesse de rotation Rm20 du second rouleau de travail 20.

La première unité de contrôle UC10 et la seconde unité de contrôle de travail UC20 sont configurées pour communiquer entre elles, directement ou indirectement, par exemple par une liaison de communication analogique ou numérique.

Dans l'exemple de la Figure 16, le système de contrôle comprenant la première unité de contrôle de travail UC10 et la seconde unité de contrôle de travail UC20 reçoit une consigne de vitesse pour le premier rouleau de travail 10. Dans l'exemple cette consigne de vitesse est une consigne de vitesse linéaire VL4, qui représente la consigne de vitesse tangentielle pour le premier rouleau de travail 10 au niveau de sa surface externe de travail, donc au niveau du l'espace de travail 30. Comme ces deux rouleaux de travail 10, 20 sont, lors d'une opération de travail, indirectement en contact l'un avec l'autre par l'intermédiaire du feuillard 4, et qu'on veut éviter tout cisaillement du feuillard 4 au niveau de son contact avec les deux rouleaux de travail 10, 20, on comprend que l'on cherche à obtenir, pour ces deux rouleaux de travail 10, 20 la même vitesse linéaire tangentielle en leurs surfaces externes respectives qui sont en contact respectivement avec l'une et l'autre des faces du même feuillard 4.

Dans cet exemple, le système est conçu pour asservir le couple suiveur T20 exercé par le moteur suiveur M20 sur l'au moins un rouleau suiveur 20, ici le second rouleau de travail 20, au couple principal **T10** exercé par le moteur principal M10 sur l'au moins un rouleau principal 10, ici le du premier rouleau de travail 10. On peut donc arbitrairement considérer que la première unité de contrôle de travail UC10 est une unité de contrôle principale (ou maître), et que la seconde unité de contrôle de travail UC20 est une unité de contrôle suiveuse.

La première unité de contrôle de travail UC10 est conçue et fonctionne comme dans la variante de la Figure 15. Elle est par exemple identique à ce qui a été décrit en relation avec la Figure 15. La seconde unité de contrôle de travail UC20 est par exemple identique à ce qui a été décrit en relation avec la Figure 15 pour la première unité de contrôle d'appui UC12 en tant qu'unité de contrôle suiveuse.

Dans l'exemple on voit que, par exemple en amont ou au sein de la seconde unité de contrôle de travail UC20, la consigne de vitesse linéaire VL4 est divisée par un paramètre représentatif du diamètre du second rouleau de travail 20, en l'occurrence par exemple tout simplement par Π(Pi) fois le diamètre DE20 du second rouleau de travail 20, pour convertir la vitesse linéaire tangentielle en vitesse de rotation. Mais, par ailleurs, selon un aspect particulier, cette consigne de vitesse linéaire VL4 est aussi multipliée, avant ou après la division par Π(Pi) fois le diamètre DE20, par un coefficient de vitesse Sf qui est par exemple supérieur à 1. Le coefficient de vitesse Sf est par exemple inférieur à 1.5, par exemple compris entre 1.01 et 1.2, par exemple entre 1.03 et 1.1. Le coefficient de vitesse Sf est par exemple fixe, mais on pourrait aussi envisager que ce coefficient de vitesse Sf soit dépendant d'un ou plusieurs paramètres, par exemple dépendant de la consigne de vitesse linéaire VL4. Cette double opération permet d'obtenir une consigne de vitesse de rotation Rc20 pour ce second rouleau de travail 20, laquelle est par exemple donnée comme valeur d'entrée à un régulateur G20 de la seconde unité de contrôle de travail UC20, qui reçoit par ailleurs aussi l'information représentative de la vitesse de rotation mesurée Rm20 du second rouleau de travail 20. On peut remarquer que la consigne suiveuse de vitesse de rotation Rc20 est, dans cet exemple, indépendante de la vitesse de rotation mesurée Rm10 du rouleau principal 10. Dans cet exemple, dans lequel le système est conçu pour asservir, en couple, la rotation du second rouleau de travail 20 au couple de rotation du premier rouleau de travail 10, la consigne de vitesse de rotation Rc20 pour ce second rouleau de travail 20 est dénommée vitesse de consigne suiveuse pour la régulation, et le régulateur G20 de la seconde unité de contrôle de travail UC20 est un régulateur suiveur dans la régulation. Le régulateur G20 de la seconde unité de contrôle de travail UC20 est par exemple de même type voire identique au régulateur G10 de la première unité de contrôle de travail UC10.

Selon un autre aspect particulier, l'unité électronique de contrôle suiveuse UC20, par exemple le régulateur suiveur G20, reçoit par ailleurs une information de limite de couple qui vise à limiter la consigne de couple qui est fournie au second moteur de travail M20, donc qui vise à limiter le couple qui est fourni par le second moteur de travail M20 au second rouleau de travail 20, sur l'axe de celui-ci. Plus particulièrement la consigne de limite de couple qui est fournie au second moteur d'appui M20 est telle que, au niveau l'espace de calandrage 30, la force d'entrainement, exercée par le second rouleau de travail 20 sur le feuillard, due au second moteur travail M20, est inférieure à la force d'entrainement, exercée par le premier rouleau de travail sur le feuillard, due au premier moteur de travail M10, donc ne la dépasse pas. Cela évite d'introduire des efforts de cisaillement dans le feuillard 4, tous en favorisant la précision et la stabilité de la régulation de vitesse du premier rouleau de travail 10. Selon un mode de réalisation, le couple principal, ici représenté par le couple T10 exercé par le premier moteur de travail M10 sur l'axe du premier rouleau de travail 10, est multiplié par un coefficient de couple Tf inférieur à 1, pour obtenir une consigne suiveuse de limite de couple Tc20 pour le rouleau suiveur, ici constitué par le second rouleau de travail 20. Le coefficient de couple Tf est par exemple supérieur à 0.5. Le coefficient de couple Tf est par exemple compris entre 0.8 et 0.99, par exemple compris entre 0.9 et 0.97.

Par exemple, dans l'exemple de la Figure 16, il est aussi appliqué un coefficient de rapport de diamètres pour tenir compte d'une éventuelle différence de diamètres entre le rouleau principal pour la régulation, ici par exemple le premier rouleau de travail 10, et le rouleau suiveur pour la régulation, ici le second rouleau de travail 20. Ainsi, le couple principal, ici le couple T10 exercé par le premier moteur de travail M10 sur le premier rouleau de travail 10, est divisé par le diamètre du rouleau principal, ici le diamètre DE10 du premier rouleau de travail 10 (ou respectivement la moitié du diamètre DE10), et multiplié par le diamètre du rouleau suiveur, ici le diamètre DE20 du second rouleau de travail 20 (respectivement la moitié du diamètre DE20).

Le calcul de la consigne suiveuse de limite de couple Tc20 pour le rouleau suiveur, ici constitué par le second rouleau de travail 20, pourra prendre en compte un rapport de réduction/multiplication d'une éventuelle transmission entre le premier moteur de travail M10 et le premier rouleau de travail 10, et/ou d'un rapport de réduction/multiplication d'une éventuelle transmission entre le second moteur de travail M20 et le second rouleau de travail 20, ceci afin que soit déterminée la limite de couple réellement appliqué sur l'axe du rouleau suiveur. Par exemple, le couple généré par le moteur sur son propre arbre sera multiplié/divisé par un rapport de réduction/multiplication d'une éventuelle transmission entre le moteur et le rouleau.

Ces opérations de multiplication et de division, pour obtenir la consigne suiveuse de limite de couple Tc20 pour le rouleau suiveur, ici constitué par le second rouleau de travail 20, peuvent être effectuées dans n'importe quel ordre. Un filtrage, par exemple de type moyennant ou passe-bas, peut être effectué pour lisser le bruit éventuel dans l'estimation du couple principal T10.

L'unité électronique de contrôle suiveuse UC20, par exemple par le régulateur suiveur G20, s'assure que le second moteur de travail M20 est piloté, par la seconde unité de contrôle d'appui UC20, par exemple par le courant électrique de pilotage I20, de manière à ce que l'écart entre la consigne de vitesse de rotation Rc20 et la vitesse de rotation Rm20 mesurée pour ce second rouleau de travail 20 soit minimisée, tout en assurant la limitation de couple appliqué sur l'axe du second rouleau de travail 20 en suivant la consigne suiveuse de limite de couple Tc20.

Avec un tel procédé, le second rouleau de travail 20, qui est le rouleau suiveur, est entraîné à une vitesse de rotation telle que la vitesse tangentielle de sa surface externe de contact est au plus proche de la vitesse tangentielle de la surface externe du premier rouleau de travail, sans la dépasser.

Dans le cadre de l'exemple de la Figure 16, le procédé 200 de contrôle de la rotation du rouleau principal, ici constitué par le premier rouleau de travail 10, et du rouleau suiveur, ici constitué par le second rouleau de travail 20, peut comprendre les étapes suivantes, illustrée schématiquement à la Figure 19.

Comme illustré à la Figure 19, le procédé 200 de contrôle peut comprendre l'étape de commander 210, par l'unité de contrôle principale UC10, l'application par le moteur principal M10 d'une consigne de vitesse de rotation Rc10 du rouleau principal 10, comme vu plus haut pour cette étape 210.

Comme déjà décrit en relation à la Figure 15, le procédé 200 peut comprendre l'étape de calculer 220 une consigne suiveuse de vitesse de rotation Rc20 pour le rouleau suiveur correspondant à la même consigne de vitesse tangentielle VL4, multipliée par un coefficient de vitesse Sf supérieur à 1, tel que décrit plus haut. La consigne de vitesse de rotation Rc20 du rouleau suiveur, ici le second rouleau de travail 20, est telle que la vitesse tangentielle de sa surface cylindrique externe serait, si cette consigne de vitesse était atteinte, supérieure à la consigne de vitesse linéaire VL4. Cependant, le procédé est conçu de telle sorte que cette consigne de vitesse de rotation Rc20 du rouleau suiveur, ici le second rouleau de travail 20, n'est pas atteinte.

En effet, le procédé 200 peut comprendre l'étape de répéter 230 les étapes suivantes, de préférence selon une fréquence de pilotage prédéterminée :
- déterminer 2310 le couple principal T10 exercé sur le rouleau principal 10 par le moteur principal M10 ;
- multiplier 2320 le couple principal T10 par un coefficient de couple Tf inférieur à 1, pour obtenir une consigne suiveuse de limite de couple Tc20 pour le rouleau suiveur 20 ;
- commander 2330, par l'unité de contrôle suiveuse UC20, l'application par le moteur suiveur M20 de la consigne suiveuse de vitesse de rotation Rc20 et de la consigne suiveuse de limite de couple Tc20 pour le rouleau suiveur 20.

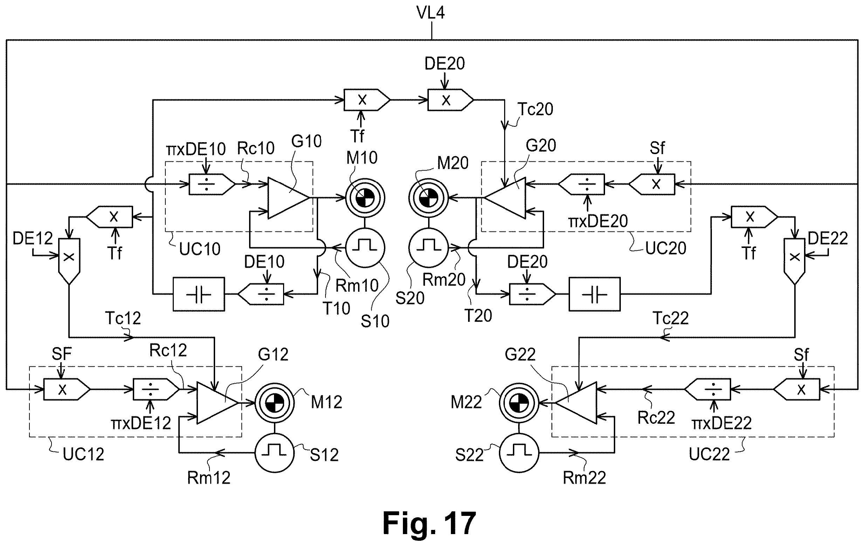

En relation avec la Figure 17, mais maintenant selon le déroulé de la Figure 20, le procédé 300 est défini dans une troisième variante pour s'appliquer au cas d'une machine de calandrage comprenant deux rouleau de travail 10, 20, l'un d'entre eux étant associé à au moins un rouleau d'appui 22. Dans une telle variante, le procédé 300 permet le contrôle de la rotation d'au moins trois rouleaux. La machine comporte un rouleau principal, par exemple le premier rouleau de travail 10 dans l'exemple de la Figure 17, rotatif autour d'un premier axe Y10, et au moins un rouleau suiveur, par exemple le second rouleau de travail 20 dans l'exemple de la Figure 17. La machine de calandrage comporte en outre au moins un rouleau suiveur secondaire, ici un second rouleau d'appui 22, qui est parallèle au rouleau suiveur 20 et qui est, directement ou indirectement, mécaniquement lié en rotation au rouleau suiveur 20. Dans la variante illustrée à la Figure 17, l'au moins un rouleau suiveur secondaire est un rouleau d'appui 22 qui est le seul rouleau d'appui associé au rouleau de travail 20 formant ici le rouleau suiveur. Cependant, dans d'autres variantes, comme illustré par exemple à la Figure 18 qui sera commentée par ailleurs, l'au moins un rouleau suiveur secondaire 22 peut être l'un de plusieurs rouleaux d'appui 21, 22 associés chacun au dit rouleau de travail 20 formant ici le rouleau suiveur, chacun étant parallèle et en appui contre le dit rouleau de travail 20.

La machine de calandrage de la Figure 17 est donc du type comportant, comme dans l'exemple de la Figure 16, un premier rouleau de travail 10 rotatif autour d'un premier axe Y10, qui sera ci-après considéré comme étant le rouleau principal, et un second rouleau de travail 20 rotatif autour d'un second axe Y20 parallèle au premier axe Y10, qui sera ci-après considéré comme étant le rouleau suiveur, les deux rouleaux de travail 10, 20 étant contrarotatifs et définissant entre eux un espace de calandrage 30 dans lequel le feuillard 4 défile dans un plan de défilement PXY selon une direction de défilement X d'amont en aval.

Pour ce qui est du procédé 300 de contrôle des deux rouleaux de travail 10, 20 de la machine de la Figure 17, il est par exemple identique à celui 200 décrit pour ces deux rouleaux dans la variante décrite en relation avec la Figure 16, et ne sera donc pas répété ici, les étapes 310, 320, et les étapes 3310, 3320 et 3330 de l'étape 330 étant respectivement identiques aux étapes 210, 220, et aux étapes 2310, 2320 et 2330 de l'étape 330, telles que décrites pour la variante de la Figure 16.

La machine de calandrage 1 de la Figure 17 comprend un second moteur d'appui M22, qui forme ici un moteur suiveur secondaire M22 d'entraînement de l'au moins un rouleau suiveur secondaire, ici le second rouleau d'appui 22. La machine de calandrage 1 comprend en outre une seconde unité de contrôle d'appui UC22, qui forme une unité de contrôle suiveuse secondaire UC22 en vitesse et en couple du moteur suiveur secondaire M22. Dans cette variante, l'unité de contrôle suiveuse UC20 est fonctionnellement associée à un estimateur de couple suiveur configuré pour déterminer un couple suiveur T20 exercé par le moteur suiveur M20 sur l'au moins un rouleau suiveur 20, ce qui est seulement optionnel et non représenté dans la variante de la Figure 16. L'estimateur de couple suiveur peut être identique ou similaire au premier estimateur de couple décrit plus, et peut fonctionner de manière identique ou similaire, pour déterminer dans ce cas le couple suiveur T20. L'estimateur de couple suiveur peut être un élément distinct de l'unité de contrôle de travail suiveuse UC20, avec une liaison de communication directe ou indirecte entre les deux, ou peut être intégré à l'unité de contrôle de travail suiveuse UC20.

L'unité de contrôle suiveuse UC20, en l'occurrence la seconde unité de contrôle de travail UC20, et l'unité de contrôle suiveuse secondaire UC22, en l'occurrence la seconde unité de contrôle d'appui UC22, sont configurées pour communiquer entre elles directement ou indirectement, par exemple par une liaison de communication analogique ou numérique.

Dans cette variante de la Figure 17, le système est conçu pour asservir le couple suiveur secondaire T22 exercé par le moteur suiveur secondaire M22 sur le second rouleau d'appui 22, au couple suiveur T20 exercé par le moteur suiveur M20 sur l'au moins un rouleau suiveur 20, ici le second rouleau de travail 20, lequel est lui-même asservi au couple principal T10 exercé par le moteur principal M10 sur l'au moins un rouleau principal 10, ici le premier rouleau de travail 10.

Dans la variante illustrée à la Figure 17, on voit que, par exemple en amont ou au sein de la seconde unité de contrôle d'appui UC22, la vitesse consigne de linéaire VL4 est divisée par un paramètre représentatif du diamètre du second rouleau d'appui 22, en l'occurrence par exemple tout simplement par Π(Pi) fois le diamètre DE22 du second rouleau d'appui 22. Mais, par ailleurs, selon un aspect particulier analogue à ce qui a déjà été décrit pour un rouleau suiveur, cette consigne de vitesse linéaire VL4 est aussi multipliée, avant ou après la division par Π(Pi) fois le diamètre DE22, par un coefficient de vitesse Sf qui est par exemple supérieur à 1. Le coefficient de vitesse Sf est par exemple inférieur à 1.5, par exemple compris entre 1.01 et 1.2, par exemple entre 1.03 et 1.1. Le coefficient de vitesse Sf est par exemple fixe, mais on pourrait aussi envisager que ce coefficient de vitesse Sf soit dépendant d'un ou plusieurs paramètres, par exemple dépendant de la consigne de vitesse linéaire VL4. Le coefficient de vitesse Sf utilisé par l'unité de contrôle suiveuse secondaire UC22 peut être le même que celui utilisé par l'unité de contrôle suiveuse UC20. Cette double opération permet d'obtenir une consigne de vitesse de rotation Rc22 pour ce rouleau suiveur secondaire 22, laquelle est par exemple donnée comme valeur d'entrée à un régulateur G22 de la seconde unité de contrôle d'appui UC22. On peut remarquer que la consigne suiveuse secondaire de vitesse de rotation Rc22 est, dans cet exemple, indépendante de la vitesse de rotation mesurée Rm20 du rouleau suiveur 20 indépendante de la vitesse de rotation mesurée Rm10 du rouleau principal 10. De préférence, la seconde unité de contrôle d'appui UC22 reçoit par ailleurs aussi l'information représentative de la vitesse de rotation mesurée Rm22 de l'au moins un second rouleau d'appui 22 formant rouleau suiveur secondaire. Dans cet exemple, la consigne de vitesse de rotation Rc22 pour ce second rouleau d'appui 22 est dénommée consigne suiveuse secondaire de vitesse de rotation pour la régulation, et le régulateur G22 de la seconde unité de contrôle d'appui UC22 est un régulateur suiveur secondaire dans la régulation. Le régulateur G22 de la seconde unité de contrôle d'appui UC22 est par exemple de même type voire identique au régulateur G20 de la seconde unité de contrôle de travail UC20 qui forme une unité de contrôle suiveuse.

Selon un autre aspect particulier, l'unité de contrôle suiveuse secondaire UC22, par exemple le régulateur suiveur secondaire G22, reçoit par ailleurs une information de limite de couple qui vise à limiter la consigne de couple qui est fournie au second moteur d'appui M22, donc qui vise à limiter le couple qui est fourni par le second moteur d'appui M22 au second rouleau d'appui 12, sur l'axe de celui-ci. Plus particulièrement la consigne de couple qui est fournie au second moteur d'appui M22 est telle que, au niveau du contact entre le second rouleau de travail 20 et le second rouleau d'appui 22, la force d'entrainement due au second moteur d'appui M22 est inférieure à la force d'entrainement due au second moteur de travail M20. Grâce à cela, on s'assure que, des deux rouleaux 20, 22, le rouleau qui est suiveur dans la régulation, ici le second rouleau de travail 20, n'est jamais entraîné en survitesse par le rouleau suiveur secondaire qui est ici le second rouleau d'appui 12. Par conséquent, le second moteur de travail M20, qui est le moteur suiveur dans la régulation, n'est pas amené à fournir, par la faute du couplage mécanique avec le second rouleau d'appui 22, un couple négatif de freinage, ce qui favorise la précision et la stabilité de la régulation de vitesse du second rouleau de travail 20. Selon un mode de réalisation, le couple suiveur, ici représenté par le couple T20 exercé par le second moteur de travail M20 sur le second rouleau de travail 20, sur l'axe de celui-ci, est multiplié par un coefficient de couple Tf inférieur à 1, pour obtenir une consigne suiveuse secondaire de limite de couple Tc22 pour le rouleau suiveur secondaire, ici constitué par le second rouleau d'appui 22. Le coefficient de couple Tf est par exemple supérieur à 0.5. Le coefficient de couple Tf est par exemple compris entre 0.8 et 0.99, par exemple compris entre 0.9 et 0.97. Le coefficient de couple Tf utilisé pour calculer la consigne suiveuse secondaire de limite de couple Tc22 peut être le même que celui utilisé pour calculer la consigne suiveuse de limite de couple Tc20 tel que décrit ci-dessus.

Par exemple, dans l'exemple de la Figure 17, il est aussi appliqué un coefficient de rapport de diamètres pour tenir compte d'une éventuelle différence de diamètre entre le rouleau suiveur pour la régulation, ici par exemple le second rouleau de travail 20, et le rouleau suiveur secondaire pour la régulation, ici le second rouleau d'appui 22. Ainsi, le couple secondaire, ici le couple T20 exercé par le second moteur de travail M20 sur le second rouleau de travail 20, est divisé par le diamètre du rouleau suiveur (ou respectivement la moitié de ce diamètre), ici le diamètre DE20 du second rouleau de travail 20, et multiplié par le diamètre du rouleau suiveur secondaire (respectivement la moitié de ce diamètre), ici le diamètre DE22 du second rouleau d'appui 22. Le calcul de la consigne suiveuse secondaire de limite de couple Tc22 pour le rouleau suiveur secondaire, ici constitué par le second rouleau d'appui 22, pourra prendre en compte un rapport de réduction/multiplication d'une éventuelle transmission entre le second moteur de travail M20 et le second rouleau de travail 20, et/ou d'un rapport de réduction/multiplication d'une éventuelle transmission entre le second moteur d'appui M22 et le second rouleau d'appui 22, ceci afin que soit déterminée la limite de couple réellement appliqué sur l'axe du rouleau suiveur secondaire. Par exemple, le couple généré par le moteur sur son propre arbre sera multiplié/divisé par un rapport de réduction/multiplication d'une éventuelle transmission entre le moteur et le rouleau.

Ces opérations de multiplication et de division, pour obtenir la consigne suiveuse secondaire de limite de couple Tc22 pour le rouleau suiveur secondaire, ici constitué par le second rouleau d'appui 22, peuvent être effectuées dans n'importe quel ordre. Un filtrage, par exemple de type moyennant ou passe-bas, peut être effectué pour lisser le bruit éventuel dans l'estimation du couple suiveur T20.

L'unité électronique de contrôle suiveuse secondaire UC22, par exemple par le régulateur suiveur secondaire G22, s'assure que le second moteur d'appui M22 est piloté, par exemple par le courant électrique de pilotage I22, de manière à ce que l'écart entre la consigne de vitesse de rotation Rc22 et la vitesse de rotation mesuré Rm22 mesurée pour ce second rouleau d'appui 22 soit minimisée, tout en assurant la limitation de couple appliqué sur l'axe du second rouleau d'appui 22 en suivant la consigne suiveuse secondaire de limite de couple Tc22.

Dans un tel cadre, le procédé 300 peut notamment comprendre, comme décrit précédemment, l'étape de répéter 330 des étapes de
- déterminer 3310 le couple principal T10 exercé sur le rouleau principal 10 par le moteur principal M10 ;
- multiplier 3320 le couple principal T10 par un coefficient de couple Tf inférieur à 1, pour obtenir une consigne suiveuse de limite de couple Tc20 pour le rouleau suiveur 20 ;
- commander 3330, par l'unité de contrôle suiveuse UC20, l'application par le moteur suiveur M20 de la consigne suiveuse de vitesse de rotation Rc20 et de la consigne suiveuse de limite de couple Tc20 pour le rouleau suiveur 20.

Le procédé 300 peut comprendre l'étape de calculer 321 une consigne suiveuse secondaire de vitesse de rotation Rc22 pour le rouleau suiveur secondaire correspondant à la même consigne de vitesse tangentielle VL4, multipliée par un coefficient de vitesse Sf supérieur à 1, tel que décrit plus haut. La consigne suiveuse secondaire de vitesse de rotation Rc22 du rouleau suiveur secondaire, ici le second rouleau d'appui 22, est telle que la vitesse tangentielle de sa surface cylindrique externe serait, si cette consigne de vitesse était atteinte, supérieure à la consigne de vitesse linéaire VL4. Cependant, le procédé est conçu de telle sorte que cette consigne suiveuse secondaire de vitesse de rotation Rc22 du rouleau suiveur secondaire, ici le second rouleau d'appui 22, n'est pas atteinte.

En effet, le procédé 300 comprend, dans l'étape de répéter 330, outre les étapes 3310, 3320, 3330 décrites ci-dessus, aussi les étapes suivantes, selon la fréquence de pilotage prédéterminée :
- déterminer 3311 le couple T20 exercé sur le rouleau suiveur 20 par le moteur suiveur M20 ;
- multiplier 3321 le couple suiveur T20 par un coefficient de couple Tf inférieur à 1, pour obtenir une consigne suiveuse secondaire de limite de couple Tc22 pour le rouleau suiveur secondaire 22 ;
- commander 3331, par l'unité de contrôle suiveuse secondaire UC22, l'application par le moteur suiveur secondaire M22 de la consigne suiveuse secondaire de vitesse de rotation Rc22 et de la consigne suiveuse secondaire de limite de couple Tc22 pour l'au moins un rouleau suiveur secondaire 22.

En relation avec la Figure 18, le procédé 300 est défini dans une quatrième variante pour s'appliquer au cas d'une machine de calandrage comprenant au moins un rouleau de travail 10, 12 et, associés au dit rouleau de travail 10, 12, au moins deux rouleaux d'appui 11, 12, respectivement amont 11 et aval 12, qui sont parallèles entre eux, qui sont parallèles au dit rouleau de travail 10 et qui sont chacun en appui contre le dit rouleau de travail 10, chacun en une zone d'appui, respectivement amont C11 et aval C12, agencées toutes les deux sur un côté du dit rouleau de travail 10 qui est opposé à l'espace de calandrage par rapport au premier axe Y10.

Plus particulièrement, c'est un cas particulier d'une telle variante qui est illustrée à la Figure 18, avec une machine qui comporte un premier rouleau de travail 10 rotatif autour d'un premier axe Y10, qui sera ci-après considéré comme étant le rouleau principal, et un second rouleau de travail 20 rotatif autour d'un second axe Y20 parallèle au premier axe Y10, qui sera ci-après considéré comme étant un rouleau suiveur, les deux rouleaux de travail 10, 20 étant contrarotatifs et définissant entre eux un espace de calandrage 30 dans lequel le feuillard 4 défile dans un plan de défilement PXY selon une direction de défilement X d'amont en aval. Pour chaque rouleau de travail 10, 12, la machine comporte, associés au dit rouleau de travail 10, 12, au moins deux rouleaux d'appui 11, 12, 21, 22, respectivement amont 11, 21 et aval 12, 22, qui sont parallèles entre eux, qui sont parallèles au dit rouleau de travail 10,20 et qui sont chacun en appui contre le dit rouleau de travail 10, 20 chacun en une zone d'appui, respectivement amont C11, C21 et aval C12, C22, agencées toutes les deux sur un côté du dit rouleau de travail 10, 20 qui est opposé à l'espace de calandrage par rapport à l'axe Y10, Y20 du dit rouleau de travail. Des exemples d'une telle machine sont illustrés aux Figures 1 à 10 et 12 à 14.

Dans le cas général d'une telle variante, le procédé 300 permet le contrôle de la rotation d'au moins trois rouleaux, dont un rouleau principal et deux rouleaux suiveur primaires. La machine comporte un rouleau principal, par exemple le premier rouleau de travail 10 dans l'exemple de la Figure 18, et au moins deux rouleaux suiveurs, par exemple le second rouleau de travail 20 et un des deux premiers rouleaux d'appui 11, 12 dans l'exemple de la Figure 18. Dans l'exemple de la Figure 18, les au moins trois rouleaux peuvent être constitués du premier rouleau de travail 10, en tant que rouleau principal, et des deux premiers rouleaux d'appui 11, 12 en tant que deux rouleaux suiveurs. Dans les deux cas, les deux rouleaux suiveurs sont chacun liés mécaniquement au même rouleau principal, soit par contact direct, par exemple dans le cas d'un rouleau de travail et d'un rouleau d'appui associé, soit par contact indirect, dans le cas de deux rouleaux de travail qui sont chacun au contact d'une face d'un feuillard défilant entre les deux rouleaux de travail, mais indépendamment l'un de l'autre. Ainsi, parmi les trois rouleaux considérés, aucun n'est un rouleau suiveur secondaire mécaniquement lié à un rouleau suiveur.

Cela n'empêche pas que la machine de calandrage illustré à la Figure 18 comporte en outre au moins un rouleau suiveur secondaire, ici les deux seconds rouleaux d'appui 21, 22, qui sont mécaniquement liés chacun, indépendamment l'un de l'autre, en rotation au rouleau suiveur qu'est le second rouleau de travail 20, et qui sont par exemple chacun pilotés, indépendamment l'un de l'autre, de la manière décrite en relation avec la Figure 17.

Pour ce qui est du procédé de contrôle des deux rouleaux de travail 10, 20 de la machine de la Figure 18, il est par exemple identique à celui décrit pour ces deux rouleaux de travail dans la variante décrite en relation avec la Figure 16, et ne sera donc pas répété ici. De même, pour ce qui est du procédé de contrôle du premier rouleau de travail 10 et du premier rouleau d'appui aval 12, il est par exemple identique à celui décrit pour ces deux rouleaux de travail dans la variante décrite en relation avec la Figure 17, et ne sera donc pas répété ici. Pour ce qui est du procédé de contrôle du premier rouleau de travail 10 et du premier rouleau d'appui amont 11, il est par exemple identique, mutatis mutandis, à celui décrit pour le premier rouleau de travail 10 et le premier rouleau d'appui aval 12, dans la variante décrite en relation avec la Figure 15, et ne sera donc pas inutilement développé ici. Pour ce qui est du procédé de contrôle du second rouleau de travail 20 et du second rouleau d'appui amont 21, il est par exemple identique, mutatis mutandis, à celui décrit pour le second rouleau de travail 10 et le second rouleau d'appui aval 22, dans la variante décrite en relation avec la Figure 17, et ne sera donc pas inutilement développé ici. Dans tous les cas, on note que les deux rouleaux suiveurs, qui sont mécaniquement lié en rotation au même rouleau principal qu'est le premier rouleau de travail 10, sont de préférence chacun pilotés indépendamment l'un de l'autre. Pour chacun des deux rouleaux suiveurs, on pourra choisir d'utiliser la même valeur de coefficient de vitesse Sf, ou pas, et/ou on pourra choisir d'utiliser la même valeur de coefficient de couple Tf, ou pas.

Ainsi, selon un aspect de l'invention, il est proposé des procédés (200, 300) de contrôle de la rotation d'au moins deux rouleaux d'une machine de calandrage conformes à l'une ou l'autre des clauses ci-dessous.

Dans certaines variantes, il est donc proposé (Clause 1) un procédé (200, 300) de contrôle de la rotation d'au moins deux rouleaux d'une machine de calandrage (1), la machine de calandrage étant du type comportant un rouleau principal (10) rotatif autour d'un premier axe (Y10), et au moins un rouleau suiveur (20, 11, 12),
la machine de calandrage (1) comprenant un moteur principal (M10) d'entraînement du rouleau principal, et un moteur suiveur (M20, M11, M12) d'entraînement de l'au moins un rouleau suiveur (20, 11, 12),
la machine de calandrage (1) comprenant en outre une unité principale de contrôle (UC10) en vitesse du moteur principal (M10), une unité de contrôle suiveuse (UC20, UC11, UC12) en vitesse et en couple du moteur suiveur (20, 11, 12),
caractérisé en ce que le procédé (200, 300) comprend les étapes suivantes:
   - commander (210, 310), l'application par le moteur principal (M10), d'une consigne de vitesse de rotation (Rc10) du rouleau principal (10) correspondant à une consigne de vitesse tangentielle (VL4) pour le rouleau principal ;
   - commander (2330, 3330) l'application par le moteur suiveur (M20, M11, M12) :
      ∘ - d'une consigne suiveuse de vitesse de rotation (Rc20, Rc11, Rc12) pour le rouleau suiveur (20, 11, 12) correspondant à la consigne de vitesse tangentielle (VL4) multipliée par un coefficient de vitesse (Sf) supérieur à 1 ; et
      ∘ - d'une consigne suiveuse de limite de couple (Tc20, Tc11, Tc12) pour l'au moins un rouleau suiveur (20, 11, 12) qui est inférieure au couple principal (T10) exercé sur le rouleau principal (10) par le moteur principal (M10).

Dans certaines variantes, il est donc proposé (Clause 2) un procédé (300) de contrôle de la rotation d'au moins trois rouleaux d'une machine de calandrage (1) qui reprend les caractéristiques décrites ci-dessus (clause 1), la machine de calandrage comportant en outre au moins un rouleau suiveur secondaire (21, 22),
la machine de calandrage (1) comprenant un moteur suiveur secondaire (M21, M22) d'entraînement de l'au moins un rouleau suiveur secondaire (21, 22),
caractérisé en ce que le procédé (300) comprend, en plus, au moins une étape de commander (3331) l'application par le moteur suiveur secondaire (M21, M22) :
   ∘ d'une consigne suiveuse secondaire de vitesse de rotation (Rc21, Rc22) correspondant à la consigne de vitesse tangentielle (VL4) multipliée par un coefficient de vitesse (Sf) supérieur à 1 ;
   ∘ et d'une consigne suiveuse secondaire de limite de couple (Tc21, Tc22) pour l'au moins un rouleau suiveur secondaire (21, 22) qui est inférieure au couple suiveur (T20) exercé sur le rouleau suiveur (20) par le moteur principal (M20).

Dans certaines variantes, et selon un aspect plus particulier, il est donc proposé (Clause 3) un procédé (200, 300) de contrôle de la rotation d'au moins deux rouleaux d'une machine de calandrage (1), la machine de calandrage étant du type comportant un rouleau principal (10) rotatif autour d'un premier axe (Y10), et au moins un rouleau suiveur (20, 11, 12),
la machine de calandrage (1) comprenant un moteur principal (M10) d'entraînement du rouleau principal, et un moteur suiveur (M20, M11, M12) d'entraînement de l'au moins un rouleau suiveur (20, 11, 12),
la machine de calandrage (1) comprenant en outre une unité principale de contrôle (UC10) en vitesse du moteur principal (M10), une unité de contrôle suiveuse (UC20, UC11, UC12) en vitesse et en couple du moteur suiveur (20, 11, 12),
caractérisé en ce que le procédé (200, 300) comprend les étapes suivantes:
   - commander (210, 310), par l'unité de contrôle principale (UC10), l'application par le moteur principal (M10) d'une consigne de vitesse de rotation (Rc10) du rouleau principal (10) correspondant à une consigne de vitesse tangentielle (VL4) pour le rouleau principal ;
   - calculer (220, 320) une consigne suiveuse de vitesse de rotation (Rc20, Rc11, Rc12) pour le rouleau suiveur (20, 11, 12) correspondant à la consigne de vitesse tangentielle (VL4) multipliée par un coefficient de vitesse (Sf) supérieur à 1 ;
   - répéter (230, 330) les étapes suivantes, selon une fréquence de pilotage prédéterminée :
      ∘ déterminer (2310, 3310) le couple principal (T10) exercé sur le rouleau principal (10) par le moteur principal (M10) ;
      ∘ multiplier (2320, 3320) le couple principal (T10) par un coefficient de couple (Tf) inférieur à 1, pour obtenir une consigne suiveuse de limite de couple (Tc20, Tc11, Tc12) pour le rouleau suiveur (20, 11, 12);
      ∘ commander (2330, 3330), par l'unité de contrôle suiveuse (UC20, UC11, UC12), l'application par le moteur suiveur (M20, M11, M12) de la consigne suiveuse de vitesse de rotation (Rc20, Rc11, Rc12) et de la consigne suiveuse de limite de couple (Tc20, Tc11, Tc12) pour l'au moins un rouleau suiveur (20, 11, 12).

Dans certaines variantes, et selon un aspect plus particulier, il est donc proposé (Clause 4) un procédé (300) de contrôle de la rotation d'au moins trois rouleaux d'une machine de calandrage (1) qui reprend les caractéristiques décrites ci-dessus (clause 3), la machine de calandrage comportant en outre au moins un rouleau suiveur secondaire (21, 22),
la machine de calandrage (1) comprenant un moteur suiveur secondaire (M21, M22) d'entraînement de l'au moins un rouleau suiveur secondaire (21, 22),
la machine de calandrage (1) comprenant en outre une unité suiveuse secondaire de contrôle (UC21, UC22) en vitesse et en couple du moteur suiveur secondaire (22),
caractérisé en ce que le procédé (300) comprend les étapes suivantes:
   - calculer (321) une consigne suiveuse secondaire de vitesse de rotation (Rc21, Rc22) pour le rouleau suiveur secondaire (21, 22) correspondant à la consigne de vitesse tangentielle (VL4) multipliée par un coefficient de vitesse (Sf) supérieur à 1 ;
   - répéter (330) les étapes suivantes, selon une fréquence de pilotage prédéterminée :
      ∘ déterminer (3311) le couple (T20) exercé sur le rouleau suiveur (20) par le moteur suiveur (M20) ;
      ∘ multiplier (3321) le couple suiveur (T20) par un coefficient de couple (Tf) inférieur à 1, pour obtenir une consigne suiveuse secondaire de limite de couple (Tc21, Tc22) pour le rouleau suiveur secondaire (21, 22);
      ∘ commander (3331), par l'unité de contrôle suiveuse secondaire (UC21, UC22), l'application par le moteur suiveur secondaire (M21, M22) de la consigne suiveuse secondaire de vitesse de rotation (Rc21, Rc22) et de la consigne suiveuse secondaire de limite de couple (Tc21, Tc22) pour l'au moins un rouleau suiveur secondaire (21, 22).

Dans certaines variantes, il est donc proposé (Clause 5) un procédé (200, 300) de contrôle de la rotation d'au moins deux rouleaux d'une machine de calandrage (1) qui reprend les caractéristiques décrites ci-dessus pour l'un quelconque des procédés ci-dessus (donc selon l'une quelconque des clauses 1 à 4), la machine comportant un premier rouleau de travail (10) rotatif autour d'un premier axe (Y10) et un second rouleau de travail (20) rotatif autour d'un second axe (Y20) parallèle au premier axe (Y10), les deux rouleaux de travail (10, 20) étant contrarotatifs et définissant entre eux un espace de calandrage (30) dans lequel un feuillard (4) à calandrer défile dans un plan de défilement (PXY) selon une direction de défilement (X) d'amont en aval,
caractérisé en ce que le premier rouleau de travail est le rouleau principal et le second rouleau de travail est un rouleau suiveur.

Dans certaines variantes, il est donc proposé (Clause 6) un procédé (200, 300) de contrôle de la rotation d'au moins deux rouleaux d'une machine de calandrage (1) qui reprend les caractéristiques décrites ci-dessus pour le procédé précédent (donc selon la clause 5), caractérisé en ce que la machine comporte au moins un rouleau d'appui (11, 12), qui est parallèle au premier rouleau de travail (10) et qui est en appui contre le premier rouleau de travail (10), en une zone d'appui (C11, C12), agencée sur un côté du premier rouleau de travail (10), et en ce que le premier rouleau de travail est le rouleau principal et l'au moins un rouleau d'appui (11, 12) est un rouleau suiveur.

Dans certaines variantes, il est donc proposé (Clause 7) un procédé (200, 300) de contrôle de la rotation d'au moins deux rouleaux d'une machine de calandrage (1) qui reprend les caractéristiques décrites ci-dessus pour le procédé selon la clause 5, caractérisé en ce que la machine de calandrage (1) comporte, associés au premier rouleau de travail (10), au moins deux rouleaux d'appui (11, 12), respectivement amont (11) et aval (12), qui sont parallèles entre eux, qui sont parallèles au premier rouleau de travail (10) et qui sont chacun en appui contre le premier rouleau de travail (10), chacun en une zone d'appui (C11, C12), respectivement amont (C11) et aval (C12), agencées toutes les deux sur un côté du premier rouleau de travail (10) qui est opposé à l'espace de calandrage par rapport au premier axe (Y10), en ce que le premier rouleau de travail est le rouleau principal, en ce que chaque rouleau de d'appui (11, 12) est un rouleau suiveur du rouleau principal.

Dans certaines variantes, il est donc proposé (Clause 8) un procédé (300) de contrôle de la rotation d'au moins deux rouleaux d'une machine de calandrage (1) qui reprend les caractéristiques décrites ci-dessus pour le procédé selon la clause 5, caractérisé en ce que la machine comporte au moins un rouleau d'appui (21, 22), qui est parallèle au second rouleau de travail (20) et qui est en appui contre le second rouleau de travail (20), en une zone d'appui (C21, C22), agencée sur un côté du second rouleau de travail (20), et en ce que le second rouleau de travail est un rouleau suiveur et l'au moins un rouleau d'appui (11, 12) est un rouleau suiveur secondaire.

Dans certaines variantes, il est donc proposé (Clause 9) un procédé (300) de contrôle de la rotation d'au moins deux rouleaux d'une machine de calandrage (1) qui reprend les caractéristiques décrites ci-dessus pour le procédé selon la clause 5, caractérisé en ce que la machine de calandrage (1) comporte, associés au second rouleau de travail (20), au moins deux rouleaux d'appui (21, 22), respectivement amont (21) et aval (22), qui sont parallèles entre eux, qui sont parallèles au second rouleau de travail (20) et qui sont chacun en appui contre le second rouleau de travail (20), chacun en une zone d'appui (C21, C22), respectivement amont (C21) et aval (C22), agencées toutes les deux sur un côté du second rouleau de travail (20) qui est opposé à l'espace de calandrage par rapport au premier axe (Y20), en ce que le second rouleau de travail est un rouleau suiveur, en ce que chaque rouleau d'appui (21, 22) est un rouleau suiveur secondaire du second rouleau de travail (20).

Dans certaines variantes, il est donc proposé (Clause 10) un procédé (200, 300) de contrôle qui reprend les caractéristiques décrites ci-dessus pour l'un quelconque des procédés ci-dessus (donc selon l'une des clauses précédentes), dans laquelle la fréquence de pilotage prédéterminée est supérieure à une mesure par milliseconde, de préférence supérieure à une mesure par microseconde.

On décrira maintenant des exemples d'application d'un ou plusieurs des enseignements concernant les machines et les procédés ci-dessus.

On a illustré à la Figure 21 un exemple d'une installation 1000 de production en continu d'un film 4 formé d'une couche auto-supportée d'un matériau obtenu par calandrage d'une poudre, ladite installation 1000 comprenant au moins une machine de calandrage 1 du type décrit ci-dessus et pouvant mettre en œuvre un procédé de contrôle tel que décrit ci-dessus.

Le film 4 est par exemple une couche de matériau d'électrode auto-supportée, qui est introduit dans la machine de calandrage 1 sous forme de poudre, qui y est calandré seul, éventuellement avec apport de chaleur, pour donner de la cohésion à la couche de matériau d'électrode.

Le matériau d'électrode peut par exemple comprendre un matériau actif d'électrode associé à un liant, par exemple un liant fibrillable. La matériau actif d'électrode peut par exemple être ou comprendre un oxyde métallique de lithium (par exemple de type NMC, NCA ou LFP) et/ou du graphite et/ou du carbone activé dans le cas d'une cathode, ou du graphite ou du silicium dans le cas d'une anode. Le liant fibrillable peut par exemple être ou comprendre du polytétrafluoroéthylène (PTFE), du polyvinylpyrrolidone (PVP), du polyfluorure de vinylidène (PVDF), de l'oxyde de polyéthylène (PEO), du polyéthylène (PE) et/ou de l'arboxy-méthylcellulose (CMC), ou une combinaison de ces éléments. Les liants fibrillables peuvent être caractérisés par leur consistance molle, souple et pliable et, en particulier, par leur capacité à s'étirer, à s'allonger et à devenir et plus fins pour prendre un aspect fibreux lorsqu'ils sont soumis à des efforts de cisaillement.

Le film ainsi produit est de préférence un composant de cellule électrochimique, notamment un composant d'électrode pour des cellules électrochimiques, tout particulièrement pour des cellules électrochimiques de batterie d'accumulateurs électriques, notamment de type lithium-ion.

L'installation 1000 comporte au moins une section de formation 1200 du film. A titre d'exemple, l'installation 1000 peut comporter, successivement, une section d'alimentation 1100, une section de formation 1200 du film, une section d'extraction 1300 du film, et une section de finition 1400 du film.

La section de formation 1200 du film comprend une machine de calandrage principale 1 qui peut avantageusement être conforme à l'une quelconque des variantes décrites ci-dessus. La machine de calandrage principale 1 est par exemple réalisée sous la forme d'une machine conforme à l'un ou l'autre des exemples décrits en relation avec l'une ou l'autres des Figures 1 à 10 ou 12 à 14. Cette machine de calandrage principale 1 peut mettre en œuvre l'un ou l'autre des procédés décrits ci-dessus, notamment décrits en référence à l'une des Figures 11 et 15 à 20.

La machine de calandrage principale 1 est agencée de telle sorte que la direction transversale Y des axes Y10, Y20 des deux rouleaux de travail 10, 20 est horizontale et la direction de défilement X est verticale. Le plan de défilement PXY est donc vertical. De ce fait, les deux rouleaux de travail 10, 20 délimitent, entre leurs surfaces cylindriques externes, juste en amont de l'espace de calandrage 30, un espace amont 31 qui est agencé verticalement juste au-dessus de l'espace de calandrage 30 et qui s'étend transversalement sur la dimension transversale de l'axe des rouleaux de travail 10, 20. L'espace amont 31, délimité par les surfaces cylindriques externes des deux rouleaux de travail 10, 20, présente donc, en vue transversale, un profil d'entonnoir et s'étend transversalement sur la dimension transversale des rouleaux de travail 10, 20, ce profil d'entonnoir débouchant vers le bas, en son endroit de convergence, dans l'espace de calandrage 30.

La machine de calandrage principale 1 est alimentée en continu par la section d'alimentation 1100 qui déverse en continu dans l'espace amont 31, de préférence de manière contrôlée, de préférence par la simple opération de la gravité terrestre, un matériau sous forme de poudre, à savoir le matériau qui est destiné à former la couche auto-supportée, par exemple le matériau actif d'électrode. Par la gravité, et par l'effet d'entraînement du mouvement contrarotatifs des rouleaux de travail 10, 20, le matériau sous forme de poudre est entraîné depuis l'espace amont 31 dans l'espace de calandrage 30 dans lequel la pression de calandrage génère une agglomération du matériau, au point de former, en aval de l'espace de calandrage 30, un film 4 auto-supporté du matériau formant un feuillard ayant suffisamment de cohésion pour pouvoir être pris en charge par les sections suivantes de l'installation 1000, par exemple ici la section de finition 1400. Pour la suite de la description, on prendra comme hypothèse que le film 4 ainsi formé présente, selon la direction transversale, une largeur de formation de film. Typiquement, cette largeur de formation de film peut être comprise entre 5 cm et 300 cm, par exemple entre 50 cm et 150 cm. En amont de l'espace de calandrage 30, le feuillard 4 au sens du présent texte est donc constitué d'une couche ou quantité de poudre ou mixture comprenant une ou plusieurs poudres, par exemple délivrée par la section d'alimentation 1100 sur une largeur de travail à l'entrée de l'espace de calandrage 30, la poudre ou mixture comprenant une ou plusieurs poudres étant encore non agglomérée, ou seulement partiellement agglomérée, la poudre étant agglomérée par calandrage dans l'espace de calandrage pour former le film 4 qui constitue le feuillard en aval de l'espace de calandrage.

La section d'alimentation 1100 comprend par exemple une unité de dosage linéaire 1120 qui délivre, sur un tapis roulant transporteur 1140 ayant une largeur selon la direction transversale Y supérieure à la largeur de formation de film, une couche régulière de poudre. L'unité de dosage comporte par exemple un réservoir de poudre 1122 et au moins un rouleau doseur 1124, qui est agencé verticalement sous le réservoir de poudre 1122 et qui tourne autour de son axe transversal de manière à recevoir du réservoir 1122 une quantité de poudre et à la déverser régulièrement, sur la largeur de formation, sur le tapis roulant transporteur 1140 dont une partie amont est agencée sous le rouleau doseur 1124. Le tapis roulant transporteur 1140 s'étend selon un plan sensiblement horizontal ici et défile selon ce plan depuis sa partie amont jusqu'à une extrémité aval 1142 de déversement au niveau de laquelle la poudre déposée sur le tapis roulant transporteur 1140 est déversée, de préférence par gravité, dans une trémie 1160 conduisant et déversant la poudre dans l'espace amont 31 de la machine de calandrage principale 1. De préférence, il est prévu un capteur 1180 permettant de déterminer la quantité instantanée de poudre contenue dans l'espace amont 31, par exemple un capteur de niveau, par exemple un capteur optique. L'installation 1000 comporte de préférence une unité électronique de pilotage qui est susceptible de piloter l'unité de dosage linéaire 1120, par exemple en pilotant la vitesse de rotation du rouleau doseur 1124, et/ou en pilotant le tapis roulant transporteur 1140, par exemple en pilotant une vitesse de défilement du tapis roulant transporteur 1140, pour maintenir la quantité instantanée de poudre contenue dans l'espace amont 31 dans une plage de valeurs optimale, au fur et à mesure que la poudre est entraînée depuis l'espace amont 31 dans l'espace de calandrage 30 de la machine de calandrage principale 1.

Dans la machine de calandrage principale 1, il est de préférence prévu un réglage dynamique de la position relative des deux rouleaux de travail 10, 20, pendant une phase de production, ceci afin d'adapter en temps réel l'écartement entre les deux rouleaux de travail 10, 20 au niveau de l'espace de calandrage 30, notamment pour s'adapter aux variations de conditions de calandrage au fur et à mesure du défilement du matériau et de la formation du film 4 au travers de l'espace de calandrage 30. Dans l'exemple illustré, le réglage dynamique de la position relative des deux rouleaux de travail 10, 20 peut être asservi à une mesure représentative de l'épaisseur du film 4. Par exemple, la mesure représentative de l'épaisseur du film 4 peut être obtenue à l'aide d'un ou plusieurs capteurs, qui peuvent par exemple être ou comprendre ou un plusieurs capteurs d'épaisseurs du film 4 et/ou qui peuvent par exemple être ou comprendre ou un plusieurs capteurs d'une distance représentative de l'écartement de travail entre les deux rouleaux 10, 20. Dans l'exemple, on a illustré que la machine de calandrage principale peut être équipée d'un dispositif de nettoyage 1240 de la surface cylindrique externe de travail des rouleaux de travail 10, 20. Le dispositif de nettoyage 1240 peut comporter, pour chaque rouleau de travail 10, 20, une ou plusieurs racles qui frottent contre la surface cylindrique externe de travail du rouleau afin de balayer tout résidu, notamment résidu de poudre. Le dispositif de nettoyage 1240 peut être associé à une dispositif de récupération 1260, notamment à un dispositif de récupération par aspiration, pour récolter ces résidus, avec éventuellement une possibilité de recyclage de ces résidus.

Dans l'exemple illustré sur les figures, la section d'extraction 1300 de l'installation 1000 est conçue pour récupérer en continu le film 4 qui est produit dans la machine de calandrage principale 1, en sortie en aval de l'espace de calandrage 30. Dans l'exemple, la section d'extraction 1300 comporte dispositif de support et/ou de guidage aval qui supporte et/ou guide le film en aval de l'espace de calandrage. Dans l'exemple, le dispositif de support et/ou de guidage aval est réalisé sous la forme d'un tapis roulant transporteur 1320 qui s'étend ici selon un plan sensiblement horizontal depuis une extrémité amont 1322 jusqu'à une extrémité aval 1324. Le tapis roulant transporteur 1320 présente une vitesse de défilement qui est sensiblement égale à la vitesse de défilement du film 4 au travers de l'espace de calandrage 30.

Selon un aspect, dans la section d'extraction 1300, le film 4 présente, immédiatement en sortie de l'espace de calandrage 30, un tronçon libre 401 le long duquel est film 4 n'est en contact avec aucun élément, donc avec aucun élément de support ni de guidage. Dans l'exemple, le tronçon libre 401 du film 4 s'étend de l'espace de calandrage 30 jusqu'au tapis roulant transporteur 1320. Avantageusement, le tronçon libre 401 du film 4 présente une longueur qui est d'au moins 20 centimètres, de préférence d'au moins 50 centimètres. Par exemple le tronçon libre 401 du film 4 présente une longueur comprise entre 20 centimètres et 200 centimètres, de préférence comprise entre 50 centimètres et 150 centimètres.

Dans l'exemple, en fonctionnement continu, le tronçon libre 401 du film 4 ne s'étend pas verticalement, et ne s'étend pas selon une ligne droite mais s'étend selon une ligne courbe entre l'espace de calandrage 30 et un point de reprise, qui est ici par exemple l'extrémité amont 1322 du tapis roulant transporteur 1320, au niveau duquel le film 4 entre en contact avec le dispositif de support et/ou de guidage du film 4. Ainsi, dans l'exemple, la longueur du tronçon libre 401 du film 4 est strictement supérieure à la distance en ligne droite entre l'espace de calandrage 30 et le point de reprise. La tension du tronçon libre 401 du film 4, et donc la longueur du tronçon libre du film, dépendent notamment de la vitesse de défilement du film 4 au travers de l'espace de calandrage et d'un ou plusieurs paramètres opérationnels d'un dispositif de support et/ou de guidage aval, par exemple la vitesse de défilement du tapis roulant transporteur 1320. L'ajustement de l'un ou l'autre parmi la vitesse de défilement du film 4 au travers de l'espace de calandrage 30 et le ou les paramètres opérationnels du dispositif de support et/ou de guidage aval permet d'ajuster la tension et/ou la longueur du tronçon libre 401 du film 4, et permet d'optimiser l'opération de formation du film 4 dans la machine de calandrage principale 1.

La présence d'un tronçon libre 401 le long duquel est film 4 n'est en contact avec aucun élément, immédiatement en aval de l'espace de calandrage permet de disposer, en regard de ce tronçon de libre 401 un ou plusieurs capteurs 1310 de mesure d'au moins une caractéristique du film 4 telle qu'une caractéristique dimensionnelle (largeur, épaisseur, ...) une caractéristique rhéologique, tribologique (état de surface, ...), une caractéristique de température, etc.... De telles mesures peuvent être effectuées en continu, ou tout du moins avec une fréquence importante, supérieure à 1HZ, de préférence égale ou supérieure à plus de 500 Hz, plus préférentiellement supérieure à 1kHz. De telles mesures, immédiatement en aval de l'espace de calandrage 30, et de préférence à de telles fréquences élevées, peuvent être utilisées pour un contrôle fin de l'installation, notamment un contrôle fin de l'opération de calandrage dans la machine de calandrage 1, tout particulièrement un réglage fin d'au moins un parmi le ou les paramètres opérationnels de la section d'alimentation 1100, par exemple ceux décrits plus haut, et/ou parmi le ou les paramètres opérationnels de la section de formation 1200, par exemple la vitesse de défilement du film 30 dans l'espace de calandrage 30 ou l'écartement de travail dans l'espace de calandrage 30, et/ou parmi le ou les paramètres opérationnels de la section de d'extraction 1300 et/ou de la section de finition 1400.

Dans l'exemple, la section de finition 1400 comporte au moins une machine de calandrage secondaire 1420 au sein de la laquelle le film peut subir une opération de densification. La section de finition 1400 peut cependant comporter plusieurs machines de calandrage secondaires successives au sein desquelles le film 4 peut alors subir plusieurs opérations de densification successives. Dans l'exemple la machine de calandrage secondaire 1420 est une machine à 4 rouleaux, avec deux rouleaux de travail et, pour chaque rouleau de travail, un seul rouleau d'appui. Cependant, en variante, la machine de calandrage secondaire peut être une machine comportant, pour au moins un rouleau de travail, plusieurs rouleaux d'appui, par exemple une machine de calandrage du type décrit en référence à l'une au moins parmi les Figures 1 à 10 ou 12 à 14.

Dans l'exemple illustré, la section de finition 1400 comporte au moins régulateur de tension du film 4, par exemple un régulateur de tension 1415 en amont d'une machine de calandrage secondaire 1420 et/ou un régulateur de tension 1425 en aval d'une machine de calandrage secondaire 1420. Un régulateur de tension 1415, 1425 comporte par exemple un rouleau tournant 1416, 1426 monté à l'extrémité mobile d'un balancier 1417, 1427, le balancier 1417, 1427 mettant le rouleau tournant en appui 1416, 1426 contre le film 4 avec un effort, perpendiculairement au film 4, qui est de préférence réglable, de préférence ajusté dynamiquement en fonction de paramètre opérationnels de l'installation ou de caractéristiques mesurés du film 4. Par ailleurs, un tel rouleau tournant 1416, 1426 peut aussi être muni d'un frein, de préférence d'intensité réglable, pour régler un différentiel de tension du film 4 entre l'amont et l'aval de ce rouleau.

La section de finition 1400 peut comporter d'autres éléments, comme par exemple un dispositif de découpe des bords de feuillard et/ou un dispositif d'embobinage.

## Revendications

1. Machine de calandrage (1) pour le calandrage d'un feuillard (4) à calandrer, du type comportant un premier rouleau de travail (10) rotatif autour d'un premier axe (Y10) et un second rouleau de travail (20) rotatif autour d'un second axe (Y20) parallèle au premier axe (Y10), les deux rouleaux de travail (10, 20) étant contrarotatifs et définissant entre eux un espace de calandrage (30) dans lequel le feuillard (4) défile dans un plan de défilement (PXY) selon une direction de défilement (X) d'amont en aval,
**caractérisée en ce que** la machine de calandrage (1) comporte, associés au premier rouleau de travail (10), au moins deux rouleaux d'appui (11, 12), respectivement amont (11) et aval (12), qui sont parallèles entre eux, qui sont parallèles au premier rouleau de travail (10) et qui sont chacun en appui contre le premier rouleau de travail (10), chacun en une zone d'appui (C11, C12), respectivement amont (C11) et aval (C12), agencées toutes les deux sur un côté du premier rouleau de travail (10) qui est opposé à l'espace de calandrage par rapport au premier axe (Y10).

2. Machine de calandrage (1) selon la revendication 1, **caractérisée en ce que** chaque rouleau d'appui (11, 12) associé au premier rouleau de travail (10) présente une surface externe d'appui (S11, S12) qui vient en appui sur le rouleau de travail (10) associé, et **en ce que** la distance (d11) la plus courte entre la surface externe d'appui (S11) du rouleau d'appui amont (11) et le plan de défilement (PXY) est supérieure à la distance (d12) la plus courte entre la surface externe d'appui (S12) du rouleau d'appui aval (12) et le plan de défilement (PXY).

3. Machine de calandrage (1) selon l'une quelconque des revendications 1 ou 2, **caractérisée en ce que** la machine (1) présente un premier plan tangent amont (Pt11), tangent du côté aval à la fois au premier rouleau de travail (10) et au rouleau d'appui amont (11) associé, qui forme un premier angle de dégagement amont (w11) avec le plan de défilement (PXY), et un premier plan tangent aval (Pt12), tangent du côté aval à la fois au premier rouleau de travail (10) et au rouleau d'appui aval (C12) associé, qui forme un premier angle de dégagement aval (w12) avec le plan de défilement (PXY), et **en ce que** le premier angle de dégagement amont (w11) est supérieur au premier angle de dégagement aval (w12).

4. Machine de calandrage (1) selon l'une quelconque des revendications précédentes, **caractérisée en ce que** les zones d'appui (C11, C12) des deux rouleaux d'appui (11, 12) associés au premier rouleau de travail (10) sont écartées angulairement l'une de l'autre, autour du premier axe (Y10), d'un premier angle d'écart d'appui (a10) qui est compris dans la gamme allant de 30 à 120 degrés, de préférence dans la gamme allant de 60 à 100 degrés.

5. Machine de calandrage (1) selon l'une quelconque des revendications précédentes, **caractérisée en ce que** les zones d'appui (C11, C12) des deux rouleaux d'appui (11, 12) associés au premier rouleau de travail (10) sont disposées symétriquement l'une par rapport à l'autre de part et d'autre d'un plan de travail (PYZ) comprenant le premier axe (Y10) et le second axe (Y20), et **en ce que** la bissectrice (B10) du premier angle d'écart d'appui (a10) présente une direction qui est inclinée vers l'aval en s'écartant du plan de défilement (PXY).

6. Machine de calandrage (1) selon l'une quelconque des revendications précédentes, **caractérisée en ce que** le rouleau d'appui amont (11) associé au premier rouleau de travail (10) présente un diamètre externe (DE11) qui est inférieur au diamètre externe (DE12) du rouleau d'appui aval (12) associé au premier rouleau de travail (10).

7. Machine de calandrage (1) selon l'une quelconque des revendications précédentes, **caractérisée en ce que** la machine de calandrage (1) comporte, associés au second rouleau de travail (20), deux rouleaux d'appui (21, 22), respectivement amont (21) et aval (22), qui sont parallèles entre eux, qui sont parallèles au second rouleau de travail (20) et qui sont chacun en appui contre le second rouleau de travail (20), chacun en une zone d'appui (C21, C22), respectivement amont (C21) et aval (C22), agencée sur un côté du second rouleau de travail (20) qui est opposé à l'espace de calandrage (30) par rapport au second axe (Y20).

8. Machine de calandrage (1) selon l'une quelconque des revendications précédentes, **caractérisée en ce qu'**un rouleau de travail considéré (10, 20) est mobile par rapport au groupe d'appui associé entre une position relative rapprochée dans laquelle le rouleau de travail considéré (10, 20) et les deux rouleaux d'appui (11, 12, 21, 22) associés au rouleau de travail considéré (10, 20) sont dans une position relative de contact, et une position relative écartée dans laquelle le rouleau de travail considéré (10, 20) et les deux rouleaux d'appui (11, 12, 21,22) associés au rouleau de travail considéré (10, 20) sont dans une position relative écartée.

9. Machine de calandrage (1) selon la revendication 8, **caractérisée en ce que** le rouleau de travail considéré (10) est monté rotatif sur un support de travail correspondant (14, 24), **en ce que** les deux rouleaux d'appui (11, 12) associés au rouleau de travail considéré (10, 20) sont montés rotatifs chacun autour de son propre axe sur un support d'appui correspondant (19) et **en ce que** l'un au moins du support de travail et du support d'appui correspondant est porté par un mécanisme de guidage (17, 27), par lequel le support de travail correspondant (14) est mobile par rapport au support d'appui correspondant (19) entre une position relative rapprochée dans laquelle le rouleau de travail considéré (10, 20) et les deux rouleaux d'appui (11, 12, 21, 22) associés au rouleau de travail considéré (10, 20) sont dans une position relative de contact, et une position relative écartée dans laquelle le rouleau de travail considéré (10, 20) et les deux rouleaux d'appui (11, 12) associés au rouleau de travail considéré (10, 20) sont dans leur position relative écartée.

10. Machine de calandrage (1) selon la revendication 9, **caractérisée en ce que** le support de travail correspondant (14, 24) au rouleau considéré (10, 20) est mobile, par rapport au support d'appui correspondant (19, 29) et par rapport à un bâti (2) de la machine.

11. Machine de calandrage (1) selon l'une quelconque des revendications 9 ou 10, **caractérisée en ce que** le mécanisme de guidage (17, 27) est porté par le support d'appui correspondant (19, 29) au rouleau de travail considéré (10, 20) et **en ce que** le support de travail correspondant (14, 24) est monté sur le support d'appui correspondant (19) par l'intermédiaire du mécanisme de guidage (17, 27) qui est porté par le support d'appui correspondant (19) et qui est distinct d'un bâti (2) de la machine.

12. Machine de calandrage (1) selon la revendication 11, **caractérisée en ce que** le rouleau de travail (10, 20) et le support de travail correspondant (14, 24) sont dépourvus de guidage direct sur le bâti (2) de la machine.

13. Machine de calandrage (1) selon l'une des revendications 9 à 12, **caractérisée en ce que** le support d'appui correspondant (19, 29) au rouleau de travail considéré (10, 20) est mobile par rapport au bâti (2) et **en ce que** le mécanisme de guidage (17, 27) est mobile avec le support d'appui (19, 29) par rapport au bâti (2).

14. Machine de calandrage (1) selon l'une quelconque des revendications 9 à 10, **caractérisée en ce que** le mécanisme de guidage est porté par le bâti (2) de la machine et **en ce que** le support de travail (14, 24) est monté sur le bâti (2) par l'intermédiaire du mécanisme de guidage.

15. Machine de calandrage (1) selon l'une des revendications 9 à 14, **caractérisée en ce que** le mécanisme de guidage (17, 27, 37, 47) autorise un unique degré de liberté du premier support de travail (14) par rapport au premier support d'appui (19).

16. Machine de calandrage (1) selon l'une quelconque des revendications 9 à 15, **caractérisée en ce que** le premier mécanisme de guidage (17) autorise uniquement une translation du premier support de travail (14) par rapport au premier support d'appui (19) selon une direction radiale perpendiculaire au premier axe (Y10) et parallèle à un plan de calandrage (PYZ) contenant les deux axes (Y10, Y20) des deux rouleaux de travail (10, 20).

17. Procédé de calandrage d'un feuillard (4) à calandrer, du type dans lequel on provoque le défilement du feuillard (4), dans un plan de défilement (PXY) selon une direction de défilement (X) d'amont en aval, au travers d'un espace de calandrage (30) défini entre un premier rouleau de travail (10) rotatif autour d'un premier axe (Y10) et un second rouleau de travail (20) rotatif autour d'un second axe (Y20) parallèle au premier axe (Y10), les deux rouleaux de travail (10, 20) étant contrarotatifs, **caractérisé en ce que** le procédé comporte l'application, sur le premier rouleau de travail (10), d'au moins deux rouleaux d'appui (11, 12), respectivement amont (11) et aval (12), qui sont parallèles entre eux, qui sont parallèles au premier rouleau de travail (10) et qui sont chacun en appui contre le premier rouleau de travail (10), chacun en une zone d'appui (C11, C12), respectivement amont (C11) et aval (C12), agencées toutes les deux sur un côté du premier rouleau de travail (10) qui est opposé à l'espace de calandrage par rapport au premier axe (Y10).

18. Procédé de calandrage selon la revendication 16, **caractérisé en ce que** chaque rouleau d'appui (11, 12) associé au premier rouleau de travail (10) présente une surface externe d'appui (S11, S12) qui vient en appui sur le rouleau de travail (10) associé, et **en ce que** les deux rouleaux d'appuis sont appliqués sur le rouleau de travail (10) de telle sorte que la distance (d11) la plus courte entre la surface externe d'appui (S11) du rouleau d'appui amont (11) et le plan de défilement (PXY) est supérieure à la distance (d12) la plus courte entre la surface externe d'appui (S12) du rouleau d'appui aval (12) et le plan de défilement (PXY).

19. Procédé de calandrage (100) selon la revendication 18, **caractérisée en ce que** le second rouleau de travail (20) est mobile, perpendiculairement au plan de défilement (PXY).

20. Procédé de calandrage (100) selon l'une quelconque des revendications 18 ou 19, **caractérisée en ce que** le procédé de calandrage (1) comporte l'application, en appui contre le second rouleau de travail (20), de deux rouleaux d'appui (21, 22), respectivement amont (21) et aval (22), qui sont associés au second rouleau de travail (20), qui sont parallèles entre eux, qui sont parallèles au second rouleau de travail (20) et qui sont chacun en appui contre le second rouleau de travail (20), chacun en une zone d'appui (C21, C22), respectivement amont (C21) et aval (C22), agencées toutes les deux sur un côté du second rouleau de travail (20) qui est opposé à l'espace de calandrage (30) par rapport au second axe (Y20).
